# EUROPEAN PATENT APPLICATION

(11) **EP 3 549 914 A1**
(43) Date of publication of application: **09.10.2019**
(21) Application number: 18807201.1
(22) Date of filing: 30.09.2018
(51) Int. Cl.: C02F 1/00, G05D 9/12

(54) **WATER STORAGE DEVICE AND WATER PURIFICATION EQUIPMENT**

(30) Priority: 31.01.2018 CN 201820181854 U; 31.01.2018 CN 201820181836 U; 31.01.2018 CN 201820181725 U; 31.01.2018 CN 201820182961 U; 31.01.2018 CN 201820181845 U; 31.01.2018 CN 201820181758 U
(71) Applicant: Foshan Shunde Midea Water Dispenser Manufacturing Co., Ltd., Foshan, Guangdong 528311 (CN); Midea Group Co., Ltd., Foshan, Guangdong 528311 (CN)
(72) Inventor: HE, Hai, Foshan Guangdong 528311 (CN); ANG, Yongcheng, Foshan Guangdong 528311 (CN); WU, Weiping, Foshan Guangdong 528311 (CN)
(74) Representative: Lam, Alvin
(86) International application number: PCT/CN2018/108961
(87) International publication number: WO 2019/148874

(57) **Abstract**

Disclosed are a water receiver and a water purifying apparatus, the water receiver including: a water storage cup, defined with a water intake; a base, defined with a water flow path; an electromagnetic valve, connected to the water flow path; a first and a second induction device, one being mounted in the water storage cup and moving up and down under the action of water in the water storage cup, and the other being mounted on the base; and a controller, electrically connected to the electromagnetic valve and one of the two induction devices respectively, the controller controls the electromagnetic valve to switch on when receiving a signal that one induction device which is electrically connected to the controller senses the other, and controls the electromagnetic valve to switch off when failing to receive the signal that one induction device which is electrically connected to the controller senses the other.

## Description

### FIELD

The present disclosure the field of water purification technology, and more particularly relates to a water receiver and a water purifying apparatus.

### BACKGROUND

Drinking water is a matter of which people has paid close attention to. It has been a fact that there are many unhealthy impurities in the drinking water, which is a main reason for that people has an improved awareness of healthy drinking water, and also a main reason for the increased sales of water purifying apparatus in the market.

Currently, water purifying apparatus normally includes a water purifier for preparing purified water and a water receiver for storing water. The water receiver is communicated with the water purifier by a waterway, thus purified water prepared by the water purifier can flow into the water receiver to be stored for users to take. However, when in use, users need to control the water intake of the current water receiver, which is very inconvenience.

### SUMMARY

It is one main objective of the present disclosure to provide a water receiver, aiming to facilitate water storage in the water receiver.

In order to realize the above objective, the present disclosure provides a water receiver, which is applied to a water purifying apparatus, wherein the water receiver includes:
a water storage cup, defined with a water intake;
a base, defined with a water flow path, the inlet of the water flow path is configured to communicate with a water purifier waterway the water purifying apparatus, the outlet of the water flow path is configured to butt joint with the water intake of the water storage cup;
an electromagnetic valve, connected to the water flow path;
a first induction device and a second induction device, one of the first induction device and the second induction device being mounted in the water storage cup and moving up and down under the action of water in the water storage cup, and the other being mounted on the base; and
a controller, electrically connected to the electromagnetic valve and one of the first induction device and the second induction device respectively, the controller controls the electromagnetic valve to switch on when the controller receives a signal that one of the first induction device and the second induction device which is electrically connected to the controller senses the other, and controls the electromagnetic valve to switch off when the controller fails to receive the signal that one of the first induction device and the second induction device which is electrically connected to the controller senses the other;
in one embodiment, the first induction device is a magnetic float ball with magnetic attraction, the second induction device is a magnetic switch electrically connected to the controller; or, the first induction device is a metal ball, the second induction device is a capacitance inductor electrically connected to the controller.

In one embodiment, the water storage cup is defined with a guiding structure therein which extends up and down; one of the first induction device and the second induction device which is mounted in the water storage cup is movably connected to the guiding structure, and moves along the guiding structure under the action of the water in the water storage cup.

In one embodiment, the water storage cup includes a cup body having an open upper end and a cup lid covering the cup body; the guiding structure is a movable passage disposed on the cup body and/or on the cup lid and extending up and down, the movable passage communicates with the water storage cup; one of the first induction device and the second induction device which is mounted in the water storage cup is movably mounted in the movable passage.

In one embodiment, side wall of the movable passage is defined with a water inlet which extends up and down and passes through the side wall of the movable passage.

In one embodiment, one end of the movable passage is open; the water receiver further includes a covering plate, the covering plate is fixedly connected to the open end of the movable passage.

In one embodiment, the base is hollow and forms a mounting cavity; one of the first induction device and the second induction device which is mounted on the base, and the electromagnetic valve are both fixed in the mounting cavity.

In one embodiment, a convex rib having a ring like shape is protruded on the wall of the mounting cavity adjacent to the water storage cup, the convex rib cooperates with the wall of the mounting cavity to form a mounting groove; one of the first induction device and the second induction device which is mounted on the base is plugged in the mounting groove.

In one embodiment, the wall of the mounting cavity is defined with two limiting plates which are spaced apart with each other along a up and down direction, each of the two limiting plates defines an avoiding opening through the limiting plate; the electromagnetic valve includes a valve body and connectors respectively communicated with the valve body, the valve body is engaged between the two limiting plates, each connector extends from the avoiding opening of the limiting plate at the corresponding side of each connector.

In one embodiment, the water receiver further includes a water pipe, the water pipe is mounted in the mounting cavity to form the water flow path; the base defines an avoiding hole through the base, the avoiding hole allows one end of the water pipe to extend from to communicate with the water way of the water purifier.

In one embodiment, the base includes a first housing and a second housing; the surface of the first housing facing the second housing defines a dent, a stop plate is defined at one side of the dent, a latch block is defined at the opposite side of the dent; one end of the second housing defines a plugging plate, the opposite end of the second housing defines a latch hole; the plugging plate plugs into the dent and abutting against the stop plate, the latch block latches with the latch hole, allowing the second housing to cover the dent of the first housing to form the mounting cavity together with the first housing.

In one embodiment, the base includes a first portion, a second portion disposed above the first portion, and a third portion connecting the first portion and the second portion, the outlet of the water flow path is defined on the second portion; the water intake is disposed upon the water storage cup, and aligns with the outlet of the water flow path when the water storage cup is disposed on the first portion and abuts against the third portion.

In one embodiment, the water receiver further includes a fifth induction device, the fifth induction device is mounted on the base and upon the second induction device, the fifth induction device electrically connects to the controller; the controller controls the electromagnetic valve to switch off when the controller receives a signal that the fifth induction device senses the first induction device but fails to receive a signal that the second induction device senses the first induction device; or the controller controls the electromagnetic valve to switch off when the controller fails to receive the signal that the second induction device senses the first induction device and the signal that the fifth induction device senses the first induction device.

In one embodiment, the base is hollow and forms a mounting cavity; the second induction device, the fifth induction device and the electromagnetic valve are mounted in the mounting cavity.

In one embodiment, two convex ribs having ring like shapes are protruded on the wall of the mounting cavity adjacent to the water storage cup, each of the two convex ribs cooperates with the wall of the mounting cavity to form a mounting groove; the second induction device is plugged in one of the two mounting grooves which is located below, the fifth induction device is plugged in one of the two mounting grooves which is located above.

In one embodiment, the water receiver further includes an induction switch, the induction switch is switched on when the induction switch contacts with the water storage cup, and is switched off when the induction switch is away from the water storage cup, the switch is electrically connected to the controller;
the controller controls the electromagnetic valve to switch on when the controller receives a signal that the induction switch is switched on; the controller controls the electromagnetic valve to switch off when the controller receives a signal that the induction switch is switched off; or the controller controls the electromagnetic valve to switch off when the controller receives the signal that the induction switch is switched on and receives the signal that one of the first induction device and the second induction device which is electrically connected to the controller senses the other.

In one embodiment, the base includes a first portion, a second portion disposed above the first portion, and a third portion connecting the first portion and the second portion, the outlet of the water flow path is defined on the second portion; the induction switch is mounted on the surface of the first portion facing the second portion.

In one embodiment, the surface of the first portion facing the second portion defines a receiving dent; the induction switch includes a induction body having an induction contactor and a induction shrapnel; the induction body is fixedly mounted in the receiving dent, one end of the induction shrapnel is fixedly connected to the induction body, the other end of the induction shrapnel protrudes from the receiving dent; the induction switch is switched on when the induction shrapnel is in contact with the induction contactor, and is switched off when the induction shrapnel is away from the induction contactor.

In one embodiment, the water receiver further includes a capacitance induction device, the capacitance induction device is mounted on the water storage cup or on the base, and is electrically connected to the controller; the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

In one embodiment, the outer wall of the water storage cup is partially recessed to form a receiving dent; the first induction device is fixedly mounted in the receiving dent.

In one embodiment, a first convex rib having a ring like shape is protruded on the wall of the mounting cavity adjacent to the water storage cup, the first convex rib cooperates with the wall of the mounting cavity to form a first mounting groove for the second induction device to be mounted.

In one embodiment, a second convex rib having a ring like shape is protruded on the wall of the mounting cavity adjacent to the water storage cup, the second convex rib cooperates with the wall of the mounting cavity to form a second mounting groove for the capacitance induction device to be mounted.

The present disclosure also provides a water receiver, which is applied to a water purifying apparatus, wherein the water receiver includes:
a water storage cup, defined with a water intake;
a first induction device, mounted on the water storage cup;
a second induction device, mounted in the water storage cup and moving up and down under the action of water in the water storage cup;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
a third induction device, mounted on the base and configured to sense the first induction device;
a fourth induction device, mounted on the base and configured to sense the second induction device; and
the controller, electrically connected to the electromagnetic valve, one of the first induction device and the third induction device, and one of the second induction device and the fourth induction device, the controller controls the electromagnetic valve to switch on when the controller receives a signal that one of the first induction device and the third induction device which is electrically connected to the controller senses the other, and controls the electromagnetic valve to switch off when the controller fails to receive the signal that one of the first induction device and the third induction device which is electrically connected to the controller senses the other; or, the controller controls the electromagnetic valve to switch off when the controller receives the signal that one of the first induction device and the third induction device which is electrically connected to the controller senses the other, and receives the a signal that one of the second induction device and the fourth induction device which is electrically connected to the controller senses the other.

In one embodiment, the third induction device is a magnetic switch; or, the third induction device is a capacitance inductor.

In one embodiment, two convex ribs having ring like shapes are protruded on the wall of the mounting cavity adjacent to the water storage cup, each of the two convex ribs cooperates with the wall of the mounting cavity to form a mounting groove; the second induction device is plugged in one of the two mounting grooves which is located below, the third induction device is plugged in one of the two mounting grooves which is located above.

The present disclosure also provides a water receiver, which is applied to a water purifying apparatus, wherein the water receiver includes:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
an induction switch, mounted on the base, the induction switch is switched on when the induction switch is in contact with the water storage cup, and is switched off when the induction switch is away from the water storage cup;
a capacitance induction device, mounted on the water storage cup or on the base; and
the controller, electrically connected to the electromagnetic valve, the induction switch, and the capacitance induction device; the controller controls the electromagnetic valve to switch on when the controller receives a signal that the induction switch is switched on; the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

In one embodiment, the base includes a first portion, a second portion disposed above the first portion, and a third portion connecting the first portion and the second portion, the outlet of the water flow path is defined on the second portion; the induction switch is mounted on the surface of the first portion facing the second portion, the capacitance induction device is mounted on the third portion.

In one embodiment, the induction switch includes an induction body and an induction shrapnel; the induction body is defined with an induction contactor; one end of the induction shrapnel fixedly is connected to the induction body, the other end of the induction shrapnel is spaced apart from the induction contactor, the induction switch is switched on when the induction shrapnel is in contact with the induction contactor, and is switched off when the induction shrapnel is away from the induction contactor.

In one embodiment, the surface of the first portion facing the second portion defines a receiving dent; the induction body of the induction switch is fixedly mounted in the receiving dent, and the free end of the induction shrapnel protrudes from the receiving dent.

In one embodiment, the third portion is hollow and forms a mounting cavity; the capacitance induction device and the electromagnetic valve are both fixed in the mounting cavity.

In one embodiment, a convex rib having a ring like shape is protruded on the wall of the mounting cavity adjacent to the water storage cup, the convex rib cooperates with the wall of the mounting cavity to form a mounting groove for the capacitance induction device to be mounted.

The present disclosure also provides a water purifying apparatus, which includes a water purifier configured to prepare purified water and a water receiver, the water receiver including:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
a first induction device and a second induction device, one of the first induction device and the second induction device being mounted in the water storage cup and moving up and down under the action of water in the water storage cup, and the other being mounted on the base; and
a controller, electrically connected to the electromagnetic valve and one of the first induction device and the second induction device respectively, the controller controls the electromagnetic valve to switch on when the controller receives a signal that one of the first induction device and the second induction device which is electrically connected to the controller senses the other, and controls the electromagnetic valve to switch off when the controller fails to receive the signal that one of the first induction device and the second induction device which is electrically connected to the controller senses the other.

The present disclosure also provides a water purifying apparatus, which includes a water purifier configured to prepare purified water and a water receiver communicated with the water purifier by a water way, the water receiver including:
a water storage cup, defined with a water intake;
a first induction device, mounted in the water storage cup and moving up and down under the action of water in the water storage cup;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path in series;
a second induction device, mounted on the base;
a third induction device, mounted on the base and upon the second induction device; and
a controller, electrically connected to the second induction device, the third induction device and the electromagnetic valve; the controller controls the electromagnetic valve to switch on when the controller receives a signal that the second induction device senses the first induction device; the controller controls the electromagnetic valve to switch off when the controller receives a signal that the third induction device senses the first induction device but fails to receive a signal that the second induction device senses the first induction device; or the controller controls the electromagnetic valve to switch off when the controller fails to receive the signal that the second induction device senses the first induction device and the signal that the third induction device senses the first induction device.

The present disclosure also provides a water purifying apparatus, which includes a water purifier configured to prepare purified water and a water receiver communicated with the water purifier by a water way, the water receiver including:
a water storage cup, defined with a water intake;
a first induction device, mounted on the water storage cup;
a second induction device, mounted in the water storage cup and moving up and down under the action of water in the water storage cup;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
a third induction device, mounted on the base and configured to sense the first induction device;
a fourth induction device, mounted on the base and configured to sense the second induction device; and
the controller, electrically connected to the electromagnetic valve, one of the first induction device and the third induction device, and one of the second induction device and the fourth induction device, the controller controls the electromagnetic valve to switch on when the controller receives a signal that one of the first induction device and the third induction device which is electrically connected to the controller senses the other, and controls the electromagnetic valve to switch off when the controller fails to receive the signal that one of the first induction device and the third induction device which is electrically connected to the controller senses the other; or, the controller controls the electromagnetic valve to switch off when the controller receives the signal that one of the first induction device and the third induction device which is electrically connected to the controller senses the other, and receives the a signal that one of the second induction device and the fourth induction device which is electrically connected to the controller senses the other.

The present disclosure also provides a water purifying apparatus, which includes a water purifier configured to prepare purified water and a water receiver communicated with the water purifier by a water way, the water receiver including:
a water storage cup, defined with a water intake;
a first induction device, mounted in the water storage cup and moving up and down under the action of water in the water storage cup;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
an induction switch, mounted on the base; the induction switch is switched on when the induction switch is in contact with the water storage cup, and is switched off when the induction switch is away from the water storage cup;
a second induction device, mounted on the base; and
a controller, electrically connected to the electromagnetic valve, the induction switch as well as one of the first induction device and the second induction device respectively, the controller controls the electromagnetic valve to switch on when the controller receives a signal that the induction switch is switched on; the controller controls the electromagnetic valve to switch off when the controller receives a signal that the induction switch is switched off; or the controller controls the electromagnetic valve to switch off when the controller receives the signal that the induction switch is switched on and receives the signal that one of the first induction device and the second induction device which is electrically connected to the controller senses the other.

The present disclosure also provides a water purifying apparatus, which includes a water purifier configured to prepare purified water and a water receiver communicated with the water purifier by a water way, the water receiver including:
a water storage cup, defined with a water intake;
a first induction device, mounted on the water storage cup;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
a second induction device, mounted on the base;
a capacitance induction device, mounted on the base or on the water storage cup; and
a controller, electrically connected to one of the first induction device and the second induction device, the electromagnetic valve and the capacitance induction device, the controller controls the electromagnetic valve to switch on when the controller receives a signal that one of the first induction device and the second induction device which is electrically connected to the controller senses the other, and controls the electromagnetic valve to switch off when the controller fails to receive the signal that one of the first induction device and the second induction device which is electrically connected to the controller senses the other; or controls the electromagnetic valve to switch off when the controller receives the signal that one of the first induction device and the second induction device which is electrically connected to the controller senses the other, and the signal that the capacitance induction device senses the water.

The present disclosure also provides a water purifying apparatus, which includes a water purifier configured to prepare purified water and a water receiver communicated with the water purifier by a water way, the water receiver including:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
an induction switch, mounted on the base, the induction switch is switched on when the induction switch is in contact with the water storage cup, and is switched off when the induction switch is away from the water storage cup;
a capacitance induction device, mounted on the water storage cup or on the base; and
a controller, electrically connected to the electromagnetic valve, the induction switch, and the capacitance induction device; the controller controls the electromagnetic valve to switch on when the controller receives a signal that the induction switch is switched on; the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

In accordance with the present disclosure, a water flow path is defined on the base of the water receiver, an electromagnetic valve is connected to the water flow path, in order to control the water flow path to switch on or switch off; the water storage cup and the base are respectively defined with a first induction device and a second induction device, one of the first induction device and the second induction device is mounted in the water storage cup, the other of the first induction device and the second induction device is mounted on the base, and one of the first induction device and the second induction device which is mounted in the water storage cup is movable along a up and down direction with the change of the water level in the water storage cup, the controller of the water receiver is electrically connected to the electromagnetic valve and one of the first induction device and the second induction device, a controller controls the electromagnetic valve to switch on when the controller receives a signal that one of the first induction device and the second induction device which is electrically connected to the controller senses the other, and controls the electromagnetic valve to switch off when the controller fails to receive the signal that one of the first induction device and the second induction device which is electrically connected to the controller senses the other., which facilitates controlling when to start water injection and when to stop water injection into the water storage cup, and ensures that after the water storage cup is disposed on the base, the water storage cup is always filled with water, improving users' experience. In addition, the water receiver and the water purifier of the water purifying apparatus are arranged separately, which is conducive to reducing the volume of the water purifying apparatus, thereby facilitating the installation of the water purifying apparatus. And the water storage cup of the water receiver and the base are arranged separately, also convenient for the cleaning of the water storage cup which is used to storage water.

### BRIEF DESCRIPTION OF THE DRAWINGS

In order to more clearly illustrate the embodiments of the present disclosure or the technical solutions in the prior art, the drawings used in the embodiments or the prior art description will be briefly introduced below. Obviously, the drawings in the following description are merely some of the embodiments of the present disclosure, and those skilled in the art can obtain other drawings according to the structures shown in the drawings without any creative work.
Fig.1 is a structure diagram of a water receiver of an embodiment according to the present disclosure;
Fig.2 is a structure diagram of a water purifying apparatus of an embodiment according to the present disclosure;
Fig.3 is a sectional view of the water receiver without water illustrated in Fig.1;
Fig.4 is a sectional view of the water receiver filled with water illustrated in Fig. 1
Fig.5 is an exploded view of the water storage cup of the water receiver illustrated in Fig. 1
Fig.6 is a structure diagram of a water receiver of another embodiment according to the present disclosure;
Fig.7 is an assembly view of the cup lid and the covering plate of the water receiver illustrated in Fig.6;
Fig.8 is an exploded view of the base of the water receiver illustrated in Fig.1 or Fig.6;
Fig.9 is a structure diagram of the electromagnetic valve illustrated in Fig.3 or Fig.4;
Fig.10 is a structure diagram of the base of the water receiver illustrated in Fig.1 or Fig.6;
Fig.11 is a sectional view of the water receiver without water of another embodiment illustrated in Fig.1;
Fig. 12 is a sectional view of the water receiver filled with water of another embodiment illustrated in Fig.1;
Fig.13 is an exploded view of the water storage cup of the water receiver of another embodiment illustrated in Fig.1;
Fig.14 is an assembly view of the cup lid and the covering plate of the water receiver of another embodiment illustrated in Fig.1;
Fig.15 is a sectional view of the water receiver without water of another embodiment illustrated in Fig.1;
Fig. 16 is a sectional view of the water receiver filled with water of another embodiment illustrated in Fig.1;
Fig.17 is a structure diagram of the cup lid of another embodiment illustrated in Fig.1;
Fig.18 is an exploded view of the base of the water receiver illustrated in Fig.1;
Fig.19 is a sectional view of the water receiver without water of another embodiment illustrated in Fig.1;
Fig.20 is a sectional view of the water receiver filled with water of another embodiment illustrated in Fig.1;
Fig.21 is a structure diagram of the induction switch illustrated in Fig.20;
Fig.22 is an assembly view of the base and the induction switch illustrated in Fig.20;
Fig.23 is a sectional view of the water receiver without water of another embodiment illustrated in Fig.1;
Fig.24 is a sectional view of the water receiver filled with water of another embodiment illustrated in Fig.1;
Fig.25 is a sectional view of the water receiver without water of another embodiment illustrated in Fig.1;
Fig.26 is a sectional view of the water receiver filled with water of another embodiment illustrated in Fig.1;
Fig.27 is an assembly view of the base and the induction switch of the water receiver of another embodiment illustrated in Fig. 1;
Fig.28 is a structure diagram of the induction switch illustrated in Fig.27.

The realizing of the aim, functional characteristics and advantages of the present disclosure are further described in detail with reference to the accompanying drawings and the embodiments.

### DETAILED DESCRIPTION OF THE EMBODIMENTS

The technical solutions in the embodiments of the present disclosure are clearly and completely described in the following with reference to the accompanying drawings in the embodiments of the present disclosure. It will be appreciated that the described embodiments are merely part of the embodiments of the present disclosure, rather than all the embodiments. Based on the embodiments in the present disclosure, all other embodiments obtained by those skilled in the art without creative efforts are within the scope of the present disclosure.

It should be noted that, if there is a directional indication (such as up, down, left, right, front, back, ...) in the embodiment of the present disclosure, the directional indication is merely used to explain, in a certain posture (as shown in the drawing), relative positional relationship, movement and so on between parts. If the certain posture changes, the directional indication changes correspondingly.

In addition, if there is description such as "first", "second" and so on in the embodiments of the present disclosure, the description of "first", "second" and so on are merely used for the purpose of description, and are not to be understood as indicating or implying the relative importance or as implied indicating the number of technical features indicated. Also, the technical solutions between the various embodiments may be combined with each other, but must be based on the realization of those skilled in the art, and when the combination of the technical solutions is contradictory or impossible to implement, it should be considered that the combination of the technical solutions does not exist and not within the scope of protection required by the present disclosure.

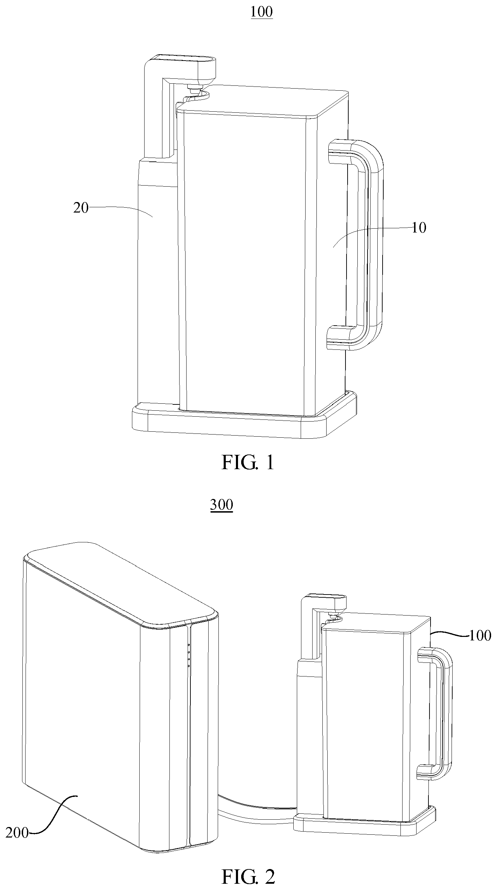

The present disclosure provides a water receiver, which is applied to a water purifying apparatus. The water receiver is communicated with a waterway of the water purifier of the water purifying apparatus, and configured to store purified water prepared by the water purifier of the water purifying apparatus. Referring to Fig.1 and 2, Fig.1 illustrates a structure diagram of a water receiver of an embodiment according to this disclosure, Fig.2 illustrates a structure diagram of a water purifying apparatus of an embodiment according to this disclosure.

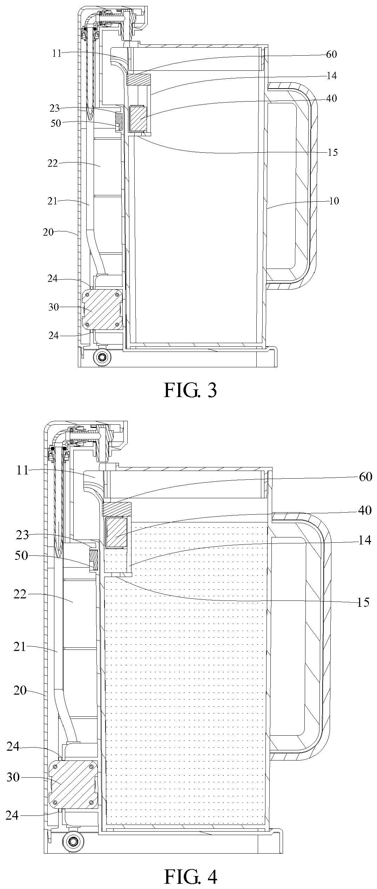

Referring to Fig.3 and Fig.4, the water receiver 100 includes a water storage cup 10 and a base 20. The water storage cup 10 is defined with a water intake 11. The water intake 11 is configured to allow external water to be injected into the water storage cup 10, and allow the water in the water storage cup 10 to be poured out for users to access. Referring to Fig.4, the base 20 is defined with a water flow path 21. The inlet of the water flow path 21 is configured to communicate with the waterway of the water purifier 200 of the water purifying apparatus 300, the outlet of the water flow path 21 is configured to butt joint with the water intake 11 of the water storage cup 10 for water injection into the water storage cup 10.

It should be noted that, the water storage cup 10 has various shapes, such as a cylindrical shape, a square column shape, a polygonal column shape, a spherical shape, and so on, which are not to be detailed herein. The water storage cup 10 generally includes a cup body 12 having an open upper end and a cup lid 13 covering the cup body 12. The water intake 11 may be disposed on the cup body 12, or on the cup lid 13, or is formed by the cup body 12 and the notch on the cup lid 13. Generally, the cup body 12 is defined with a handle for users to hold, convenient for users to take the water storage cup 10.

The base 20 may be configured to bear the water storage cup 10, and the structure of the base 20 may be similar to a faucet. In one embodiment, the base 20 is configured to bear the water storage cup 10, having a structure of a L-shape, an I-shape or other shapes. The shape of the base 20 is not specifically limited herein. The water flow path 21 may be formed by a pipe structure on the base 20 or by a pipe fixedly mounted on the base 20. The way to form the water flow path 21 is not specifically limited herein.

The water receiver 100 is further defined with an electromagnetic valve 30 and a controller (not shown in figures). The electromagnetic valve 30 is connected to the water flow path 21. The electromagnetic valve 30 may be directly connected in series to the water flow path 21, or connected in series to a pipeline communicating with the water flow path 21. The controller is electrically connected to the electromagnetic valve 30, configured to control the electromagnetic valve 30 to switch on or switch off, that is, users may control the electromagnetic valve 30 to switch on or switch off via the controller, which is convenient to control when to switch on or when to switch off the electromagnetic valve 30.

In order to control the electromagnetic valve 30 to switch on or switch off more intelligently, the water receiver 100 is further defined with a first induction device 40 and a second induction device 50. One of the first induction device 40 and the second induction device 50 is mounted in the water receiver 10, the other of the first induction device 40 and the second induction device 50 is mounted on the base 20. One which is mounted in the water receiver 10 is movable along a up and down direction under the action of water in the water receiver 10, the other which is mounted on the base 20 is disposed higher than the bottom of the water storage cup 10 but lower than the water intake 11 of the water storage cup 10.

The controller is also electrically connected to one of the first induction device 40 and the second induction device 50. When the first induction device 40 is aligned with the second induction device 50, one which is electrically connected to the controller senses the other. The controller controls the electromagnetic valve 30 to switch on or switch off according to whether one of the first induction device 40 and the second induction device 50 which is electrically connected to the controller senses the other.

When the water level in the water storage cup 10 is relatively low or no water is in the water storage cup 10, one of the first induction device 40 and the second induction device 50 which is mounted in the water storage cup 10 is unaffected by water, in this case, the first induction device 40 is aligned with the second induction device 50. When the controller receives the signal that one of the first induction device 40 and the second induction device 50 which is electrically connected to the controller senses the other, the controller triggers the control circuit of the electromagnetic valve 30 to switch the electromagnetic valve 30 on, so as to allow the purified water prepared by the water purifier 200 of the water purifying apparatus 300 to flow into the water storage cup 10. When the water level in the water storage cup 10 rises to a certain altitude, one of the first induction device 40 and the second induction device 50 which is mounted in the water storage cup 10, affected by the water in the water storage cup 10, moves upward until the first induction device 40 is completely misaligned with the second induction device 50, in this case, the controller fails to receive the signal that one of the first induction device 40 and the second induction device 50 which is electrically connected with the controller senses the other, the controller triggers the control circuit of the electromagnetic valve 30 to switch the electromagnetic valve 30 off.

In addition, when the water storage cup 10 is away from the base 20, namely when the first induction device 40 and the second induction device 50 are separated from each other, one of the first induction device 40 and the second induction device 50 which is electrically connected with the controller fails to sense the other, in this case, the controller fails to receive the signal that one of the first induction device 40 and the second induction device 50 which is electrically connected with the controller senses the other, the controller triggers the control circuit of the electromagnetic valve 30 to switch the electromagnetic valve 30 off.

In accordance with the present disclosure, a water flow path 21 is defined on the base 20 of the water receiver 100, an electromagnetic valve 30 is connected to the water flow path 21, in order to control the water flow path to switch on or switch off; the water storage cup 10 and the base 20 are respectively defined with a first induction device 40 and a second induction device 50, one of the first induction device 40 and the second induction device 50 is mounted in the water storage cup, the other of the first induction device 40 and the second induction device 50 is mounted on the base, and one of the first induction device 40 and the second induction device 50 which is mounted in the water storage cup 10 is movable along the up and down direction with the change of the water level in the water storage cup 10, the controller of the water receiver 100 is electrically connected to the electromagnetic valve 30 and one of the first induction device 40 and the second induction device 50, the controller controls the electromagnetic valve 30 to switch on when the controller receives the signal that one of the first induction device 40 and the second induction device 50 which is electrically connected to the controller senses the other; and controls the electromagnetic valve 30 to switch off when the controller fails to receive the signal that one of the first induction device 40 and the second induction device 50 which is electrically connected to the controller senses the other, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

It should be noted that, there are many types of the first induction device 40 and the second induction device 50. For example, the first induction device 40 is a magnetic float ball with magnetic attraction, the second induction device 50 is a magnetic switch electrically connected to the controller. Specifically, when the water level in the water storage cup 10 is relatively low or no water is in the water storage cup 10, the magnetic float ball is unaffected by the water in the water storage cup 10, in this case, the magnetic float ball is aligned with the magnetic switch, and the magnetic switch is switched on under the magnetic attraction of the magnetic float ball. When the controller receives the signal that the magnetic switch is switched on, the controller triggers the control circuit of the electromagnetic valve 30 to switch the electromagnetic valve 30 on, so as to allow the purified water prepared by the water purifier 200 of the water purifying apparatus 300 to flow into the water storage cup 10. When the water level of the purified water in the water storage cup 10 rises to a certain altitude, the magnetic float ball, under the action of the purified water in the water storage cup 10, moves upward until the magnetic float ball is completely misaligned with the magnetic switch, in this case, the magnetic switch is switched off. When the controller fails to receive the signal that the magnetic switch is switched on, the controller triggers the control circuit of the electromagnetic valve 30 to switch the electromagnetic valve 30 off. In addition, when the water storage cup 10 is some distance from the base 20, the magnetic float ball fails to magnetically attract the magnetic switch, in this case, the controller also fails to receive the signal that the magnetic switch is switched on, the controller triggers the control circuit of the electromagnetic valve 30 to switch the electromagnetic valve 30 off.

For another example, the first induction device 40 is a metal ball, the second induction device 50 is a capacitance inductor electrically connected to the controller. The capacitance inductor is equivalent to an electrode, therefore a capacitor is formed between the capacitance inductor and the ground, and the charging and discharging time of the capacitor formed between the capacitance inductor and the ground is fixed. The metal ball is capacitive, and a capacitor is formed between the capacitance inductor and the metal ball, which is equivalent to connecting a capacitor in series between the capacitance inductor and the ground, so that the charging and discharging time of the capacitance inductor is extended on the original basis. Therefore, the water level in the water storage cup 10 may be determined by sensing the charging and discharging time of the capacitance inductor. That is to say, when the controller receives a signal that the charging and discharging time of the capacitance inductor is relatively long, the controller triggers the control circuit of the electromagnetic valve 30 to switch the electromagnetic valve 30 on; when the controller receives a signal that the charging and discharging time of the capacitance inductor is relatively short, the controller triggers the control circuit of the electromagnetic valve 30 to switch the electromagnetic valve 30 off.

It is obvious that the first induction device 40 and the second induction device 50 are light induction devices or other induction devices, which are not to be detailed herein.

Considering the specific mounting positions of the first induction device 40 and the second induction device 50, as well as various ways for the first induction device 40 and the second induction device 50 to be electrically connected to the controller, for the convenience of description, in the following, the arrangement that the first induction device 40 is mounted in the water storage cup 10, the second induction device 50 is mounted on the base 20, and the second induction device 50 is electrically connected to the controller is taken as an example for specific explanation.

Because the first induction device 40 is movably mounted in the water storage cup 10, if the moving path thereof is not limited, it may happen that when the second induction device 50 and the first induction device 40 are in the same horizontal position, the second induction device 50 fails to sense the first induction device 40. In view of this, the water storage cup 10 is defined with a guiding structure therein which extends up and down. The first induction device 40 is movably connected to the guiding structure, and moves along the guiding structure under the action of the water in the water storage cup 10, which ensures that when the second induction device 50 is in the same horizontal position with the first induction device 40, the second induction device 50 senses the first induction device 40, thereby improving the sense accuracy of the second induction device 50, so as to avoid that the second induction device 50 fails to sense the first induction device 40 in time causing water overflow from the water storage cup 10.

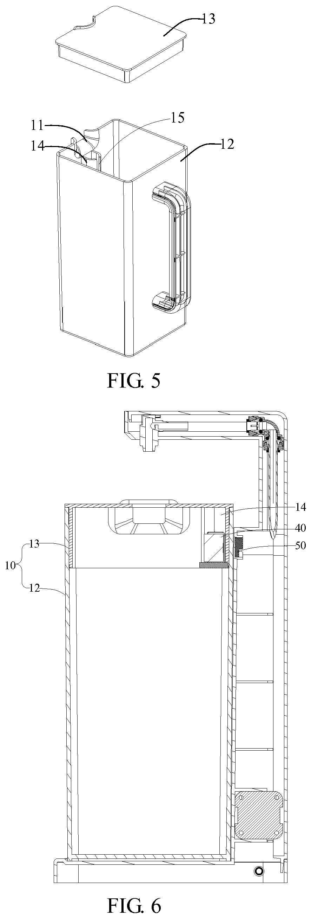

Specifically, referring to Fig.5-Fig.7, the guiding structure is a movable passage 14 which is disposed in the water storage cup 10 and extends up and down. The movable passage 14 may extend straight along the up and down direction, or extend obliquely along the up and down direction, or extend curvedly along the up and down direction. Manners to arrange the movable passage 14 are not to be detailed herein. The movable passage 14 communicates with the water storage cup 10. The first induction device 40 is mounted in the movable passage 14, and moves along the movable passage 14 under the action of the water in the water storage cup 10.

It should be noted that, the water storage cup 10 includes a cup body 12 and a cup lid 13. The movable passage 14 may be disposed on the cup body 12, or on the cup lid 13, or the movable passage 14 includes two parts which are respectively arranged on the cup body 12 and the cup lid 13, when the cup lid 13 covering the cup body 12, the movable passage 14 is formed by the two parts splicing together. Manners to arrange the movable passage 14 are not to be detailed herein.

There are many ways for the movable passage 14 to be communicated with the water storage cup 10. For example, the upper end of the movable passage 14 is open, and the lower end of the movable passage 14 is defined with a water passing hole 15. Water in the water storage cup 10 may enter into the movable passage 14 through the water passing hole 15, and flow out through the open end of the movable passage 14. For another example, side wall of the movable passage 14 is defined with a water inlet 16 which extends up and down and passes through the side wall of the movable passage 14. The water inlet 16 may extend from the lower end of the movable passage 14 to the upper end of the movable passage 14, or extend from a position of the lower end of the movable passage 14 to the upper end of the movable passage 14. As long as the position of the upper end of the movable passage 14 is level with or higher than the position of the second induction device 50 on the base 20.

To facilitate mounting the first induction device 40 in the movable passage 14, one end of the movable passage is open. Specifically, when the movable passage 14 is defined on the cup body 12, the open end of the movable passage 14 is preferably defined on the upper end of the movable passage 14; when the movable passage 14 is defined on the cup lid 13, the open end of the movable passage 14 is preferably defined on the lower end of the movable passage 14. The water receiver further includes a covering plate 60, the covering plate 60 is detachably connected to the open end of the movable passage 14, which facilitates mounting the first induction device 40 in the movable passage 14, and protects the first induction device 40 from moving out of the movable passage 14.

It should be noted that, there are many ways for the covering plate 60 to be connected to the opening end of the movable passage 14, such as, the covering plate 60 and the open end of the movable passage 14 is connected via a plug connection, a buckle connection or other connection manners, which are not to be detailed herein.

It should be noted that, the cover plate 60 may have a flat shape or a grid shape. In one embodiment, the cover plate 60 has a grid shape, which effectively prevents the cover plate 60 from moving with the water in the water storage cup 10, thereby avoiding the cover plate 60 detached from the movable passage 14.

It is obvious that, the guiding structure may be a guiding protrusion, a guiding groove, a guiding column and so on, which is protruding from the inner wall surface of the water storage cup 10 and extends up and down. Thus, they are not to be detailed herein.

It should be noted that, when the electromagnetic valve 30 and the second induction device 50 are mounted outside the base 20, they are easily affected by external factors such as water and dust. In view of this, referring to Fig.3 or Fig.4, in one embodiment of the present disclosure, the base 20 is hollow and forms a mounting cavity 22, the electromagnetic valve 30 and the second induction device 50 are both mounted in the mounting cavity 22, which effectively protects the electromagnetic valve 30 and the second induction device 50 against external factors such as water and dust.

It should be noted that, there are many ways for the second induction device 50 to be fixedly mounted in the mounting cavity 22. The second induction device 50 may be fixedly mounted in the mounting cavity 22 by screw connection, rivet riveting, buckle connection, or other connection manners. Considering the mounting and dismounting of the second induction device 50, in one embodiment of the present disclosure, the second induction device 50 is both fixedly mounted in the mounting cavity 22 by plugging. Specifically, a convex rib 23 having a ring like shape is protruded on the wall of the mounting cavity 22 adjacent to the water storage cup 10. The convex rib 23 may be a complete circular ring, or a circular ring with a notch, as long as the convex rib 23 cooperates with the wall of the mounting cavity 22 to form a mounting groove. The second induction device 50 is plugged in the mounting groove, which saves the arrangement of additional fixtures, and facilitates the mounting and dismounting of the second induction device 50.

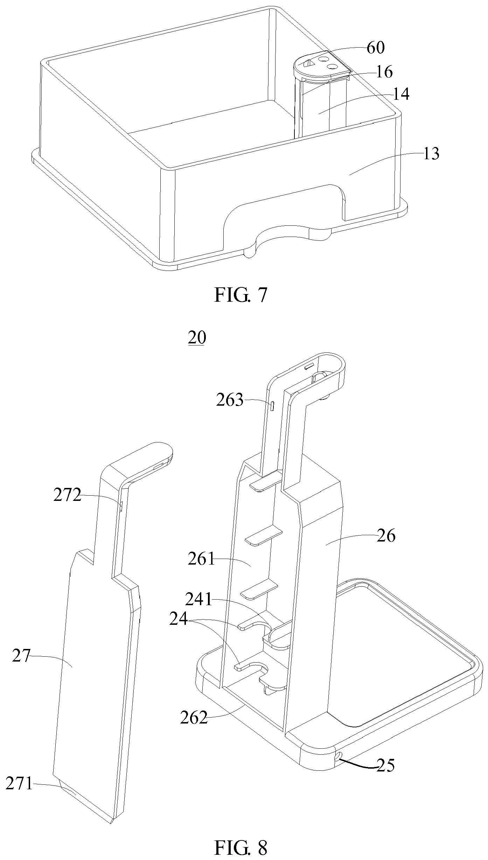

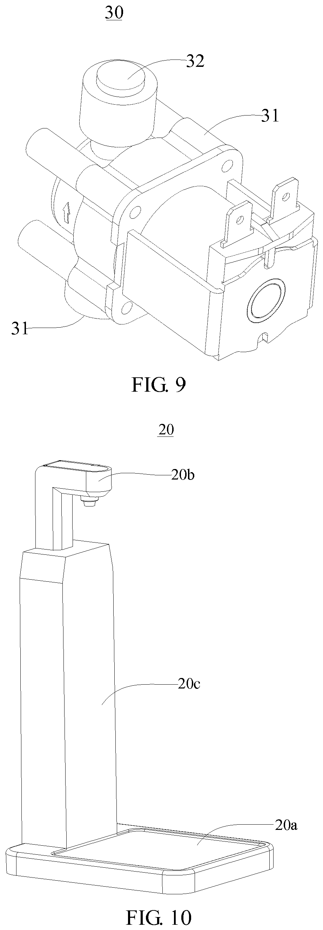

It should be noted that, there are many ways for the electromagnetic valve 30 to be fixedly mounted in the mounting cavity 22. The electromagnetic valve 30 may be fixedly mounted in the mounting cavity 22 by screw connection, rivet riveting, buckle connection, or other connection manners. Considering the mounting and dismounting of the electromagnetic valve 30, in one embodiment of the present disclosure, the electromagnetic valve 30 is fixedly mounted in the mounting cavity 22 by plugging. Specifically, referring to Fig.8 and Fig.9, the wall of the mounting cavity 22 is defined with two limiting plates 24 which are spaced apart with each other along a up and down direction, each of the two limiting plates 24 defines an avoiding opening 241 through the limiting plate 24. The electromagnetic valve 30 includes a valve body 31 and two connectors 32 disposed on the two opposite sides of the valve body 31 and communicated with the valve body 31. When the electromagnetic valve 30 is mounted in the mounting cavity 22, the valve body 31 of the electromagnetic valve 30 is engaged between the two limiting plates 24, each connector 32 of the electromagnetic valve 30 extends from the avoiding opening 241 of the limiting plate 24 at the corresponding side of each connector 32, which saves the arrangement of additional fixtures, facilitates the mounting and dismounting of the electromagnetic valve 30, and also facilitates the arrangement of the water flow path 21.

It should be noted that, the avoiding opening 241 may be formed by a hole penetrating through the limiting plate 24, or formed by a notch defined at the limiting plate 24. In one embodiment, the avoiding opening 241 is formed by a notch defined at the limiting plate 24, which allows the valve body 31 and the two connectors 32 of the electromagnetic valve 30 to be assembled with the two limiting plates 24 from one side of the two limiting plates 24, so that it is possible to install the electromagnetic valve 30 in one step, further making the installation of the electromagnetic valve 30 simpler and faster.

In order to facilitated the electromagnetic valve 30 communicated with the water flow path 21, referring to Fig.3, Fig.4 and Fig.8, in one embodiment of the present disclosure, the water flow path 21 is formed by a water pipe which is flexible, facilitating the arrangement of the water pipe. The base 20 defines an avoiding hole 25 through the base 20, one end of the water pipe extends from the avoiding hole 25, further facilitating the arrangement of the water pipe.

It should be noted that, the second induction device 50 and the electromagnetic valve 30 are mounted in the mounting cavity 22 of the base 20 after the base 20 is formed. In view of this, in one embodiment of the present disclosure, the base 20 is divided into a first housing 26 and a second housing 27. The surface of the first housing 26 facing the second housing 27 defines a dent 261. A stop plate 262 is defined at one side of the dent 261, a latch block 263 is defined at the opposite side of the dent 261.One end of the second housing 27 defines a plugging plate 271, the opposite end of the second housing 27 defines a latch hole 272. the plugging plate 271 plugs into the dent 261 and abuts against the stop plate 262, the latch hole 272 latches with the latch block 263, allowing the second housing 27 to cover the dent 261 of the first housing 26 to form the mounting cavity 22 together with the first housing 26, which facilitates mounting the second induction device 50 and the electromagnetic valve 30 in the mounting cavity 22 of the base 20.

It should be noted that, the stop plate 262 and the latch block 263 may be defined on the outer surface of the first housing 26 facing the second housing 27, or defined on the wall of the dent 261. In one embodiment, the stop plate 262 and the latch block 263 are defined on the wall of the dent 261, which ensures that when the second housing 27 covers the dent 261, the outer surface of the second housing 27 is coplanar with the outer surface of the first housing 26, so that the appearance of the outer surface of base 20 is more flat and beautiful.

In order to facilitate the water storage cup 10 to receive water, in one embodiment of the present disclosure, referring to Fig.10, the base 20 has an I-shape. Specifically, the base 20 includes a first portion 21a, a second portion 20b disposed upon the first portion 20a, and a third portion 20c connecting the first portion 20a and the second portion 20b. The outlet of the water flow path 21 is defined on the second portion 20b. The water intake 11 is disposed on the upper end of the water storage cup 10, and aligns with the outlet of the water flow path 21 when the water storage cup 10 is disposed on the first portion 20a and abuts against the third portion 20c, which facilitates determining the position when the water storage cup 10 is disposed on the first portion 20a for water receiving, convenient for the water storage cup 10 to receive water.

The present disclosure also provides a water purifying apparatus 300, referring to Fig.2, the water purifying apparatus 300 includes a water purifier 200 configured for preparing purified water and a water receiver 100 connected to the waterway of the water purifier 200, the specific structure of the water receiver 100 referring to the above embodiments. The water purifying apparatus 300 adopts all the technical solutions of the above embodiments, therefore, at least, the water purifying apparatus obtains all the effects brought by the technical solutions of the above embodiments, which are to be detailed herein.

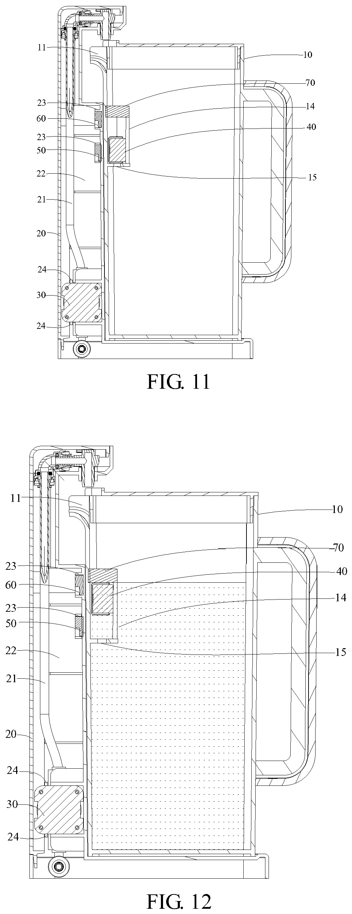

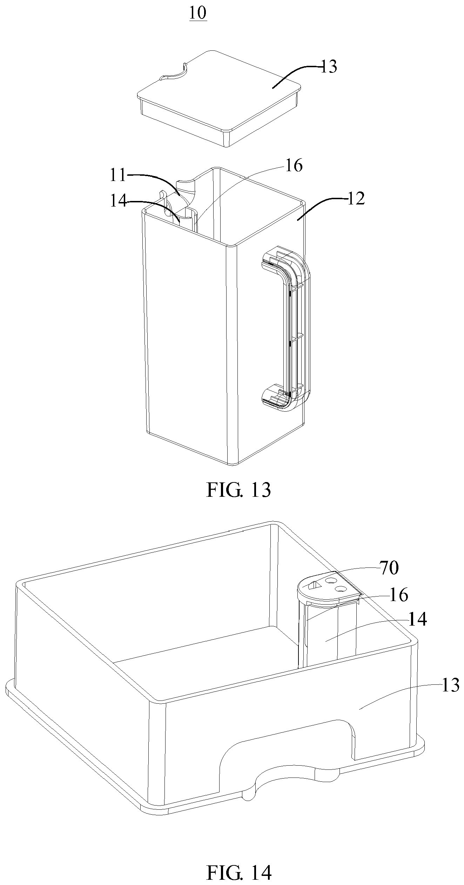

In the embodiments that the water receiver includes the first induction device and the second induction device without any other induction devices, referring to Fig.1, 2 and 8-14, the water receiver further includes a fifth induction device. The fifth induction device is mounted on the base and upon the second induction device, the fifth induction device is electrically connects to the controller. The controller controls the electromagnetic valve to switch off when the controller receives a signal that the fifth induction device senses the first induction device but fails to receive a signal that the second induction device senses the first induction device; or controls the electromagnetic valve to switch off when the controller fails to receive the signal that the second induction device senses the first induction device and the signal that the fifth induction device senses the first induction device.

When the second induction device 50 or the fifth induction device 60 is adjacent to or aligned with the first induction device 40, one which is adjacent to or aligned with the first induction device 40 senses the first induction device 40. The controller is electrically connected to the second induction device 50 and the fifth induction device 60, and controls the electromagnetic valve 30 to switch on or switch off according to whether the second induction device 50 and the fifth induction device 60 sense the first induction device 40.

When no water is in the water storage cup 10 or the water level in the water storage cup 10 is relatively low, the first induction device 40 in the water storage cup 10 is unaffected by the water in the water storage cup 10, in this case, the first induction device 40 in the water storage cup 10 is aligned with the second induction device 50 on the base 20. When the second induction device 50 senses the first induction device 40, the second induction device 50 sends an induction signal to the controller. When the controller receives the signal transmitted from the second induction device 50, the controller triggers the control circuit of the electromagnetic valve 30 to switch the electromagnetic valve 30 on, so as to allow the purified water prepared by the water purifier 200 of the water purifying apparatus 300 to flow into the water storage cup 10.As the water level in water storage cup 10 gradually rises, the first induction device 40 moves upward with the water in the water storage cup 10. During the process of the first induction device 40 moving upward, the second induction device 50 and the fifth induction device 60 sense the first induction device 40 at the same time, then the controller triggers the control circuit of the electromagnetic valve 30 to keep the electromagnetic valve 30 on. When the first induction device 40 moves upward and is aligned with the fifth induction device 60, the second induction device 50 fails to sense the first induction device 40, and the fifth induction device 60 senses the first induction device 40. The controller receives the signal that the fifth induction device 60 senses the first induction device 40 alone, and triggers the control circuit of the electromagnetic valve 30 to control the electromagnetic valve 30 to switch off.

In addition, when the second induction device 50 and the fifth induction device 60 both fail to sense the first induction device 40, it means that the water storage cup 10 is some distance from the base 20, that is to say, the water storage cup 10 is in no need for water receiving, and the controller triggers the control circuit to control the electromagnetic valve 30 to switch off.

In accordance with the present disclosure, a water flow path 21 is defined on the base 20 of the water receiver 100, an electromagnetic valve 30 is connected to the water flow path 21, in order to control the water flow path to switch on or switch off; the first induction device 40 is defined in the water storage cup 10, and movable along the up and down direction under the action of the water in the water storage cup 10, the second induction device 50 and the fifth induction device 60 which is disposed upon the second induction device 50 are defined on the base 20, and both configured to sense the first induction device 40, the controller of the water receiver 100 is electrically connected to the second induction device 50, the fifth induction device 60 and the electromagnetic valve 30, the controller controls the electromagnetic valve 30 to switch on or switch off according to whether the second induction device 50 and the fifth induction device 60 sense the first induction device 40, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

It should be noted that, there are many types of the first induction device 40, the second induction device 50 and the fifth induction device 60. For example, the first induction device 40 may be a magnetic float ball with magnetic attraction, the second induction device 50 and the fifth induction device 60 may be magnetic switches electrically connected to the controller. Specifically, when the water level in the water storage cup 10 is relatively low or no water is in the water storage cup 10, the magnetic float ball is unaffected by the water in the water storage cup 10, in this case, the magnetic float ball is aligned with one of the two magnetic switches which is located below, and the magnetic switch which is aligned with the magnetic float ball is switched on. When the controller receives the signal that the magnetic switch located below is switched on, the controller triggers the control circuit of the electromagnetic valve 30 to switch the electromagnetic valve 30 on, so as to allow the purified water prepared by the water purifier 200 of the water purifying apparatus 300 to flow into the water storage cup 10. When the water level of the purified water in the water storage cup 10 rises to a certain altitude, the magnetic float ball moves upward under the action of the purified water in the water storage cup 10. As the two magnetic switches are switched on under the action of the magnetic float ball, the controller triggers the control circuit of the electromagnetic valve 30 to keep the electromagnetic valve 30 on. When one of the two magnetic switches which is located above is aligned with the magnetic float ball, the magnetic switch located below is switched off for being unaffected by the magnetic attraction of the magnetic float ball, and the magnetic switch located above is switched on for being affected by the attraction of the magnetic float ball, in this case, the controller receives the signal that the magnetic switch located above is switched on and triggers the control circuit of the electromagnetic valve 30 to switch the electromagnetic valve 30 off. In addition, when the water storage cup 10 and the base 20 are separated from each, the two magnetic switches on the base 20 are both switched off for not being magnetically attracted by the magnetic float ball in the water storage cup 10, in this case, the controller triggers the control circuit of the electromagnetic valve 30 to switch the electromagnetic valve 30 off.

Therefore, the controller may control the control circuit of the electromagnetic valve 30 according to the charging and discharging time of the two capacitance inductors, in order to control the electromagnetic valve 30 to switch on or switch off. The specific process that the controller controls the electromagnetic valve 30 to switch on or switch off according to the metal ball and the two capacitance inductors refer to above embodiments, which is not to be detailed herein.

Considering that the first induction device 40 is movably mounted in the water storage cup 10, if the moving path thereof is not limited, it may happen that when the second induction device 50 or the fifth induction device 60 is in the same horizontal position with the first induction device 40, the second induction device 50 or the fifth induction device 60 fails to sense the first induction device 40. In view of this, the water storage cup 10 is defined with a guiding structure therein which extends up and down. The first induction device 40 is movably connected to the guiding structure, which ensures that when the second induction device 50 or the fifth induction device 60 is in the same horizontal position with the first induction device 40, the second induction device 50 or the fifth induction device 60 senses the first induction device 40, thereby improving the sense accuracy of the second induction device 50 and the fifth induction device 60, so as to avoid that the second induction device 50 or the fifth induction device 60 fails to sense the first induction device 40 in time causing water overflow from the water storage cup 10.

It should be noted that, when the second induction device 50, the fifth induction device 60 and the electromagnetic valve 30 are mounted outside the base 20, they are easily affected by external factors such as water and dust. In view of this, in one embodiment of the present disclosure, the base 20 is hollow and forms a mounting cavity 22, the second induction device 50, the fifth induction device 60 and the electromagnetic valve 30 are all mounted in the mounting cavity 22, which effectively protects the second induction device 50, the fifth induction device 60 and the electromagnetic valve 30 against external factors such as water and dust.

It should be noted that, there are many ways for the second induction device 50 and the fifth induction device 60 to be fixedly mounted in the mounting cavity 22. The second induction device 50 and the fifth induction device 60 may be fixedly mounted in the mounting cavity 22 by screw connection, rivet riveting, buckle connection, or other connection manners. Considering the mounting and dismounting of the second induction device 50 and the fifth induction device 60, in one embodiment of the present disclosure, the second induction device 50 and the fifth induction device 60 are both fixedly mounted in the mounting cavity 22 by plugging. Specifically, two convex ribs 23 having ring-like shapes are protruded on the wall of the mounting cavity 22 adjacent to the water storage cup 10 and distributed up and down. Each convex rib 23 may be a complete circular ring, or a circular ring with a notch, as long as the each convex rib 23 cooperates with the wall of the mounting cavity 22 to form a mounting groove. The second induction device 50 is plugged in one of the two mounting grooves which is located below, the fifth induction device 60 is plugged in the mounting groove of the two mounting grooves which is located above, which saves the arrangement of additional fixtures, and facilitates the mounting and dismounting of the second induction device 50 and the fifth induction device 60.

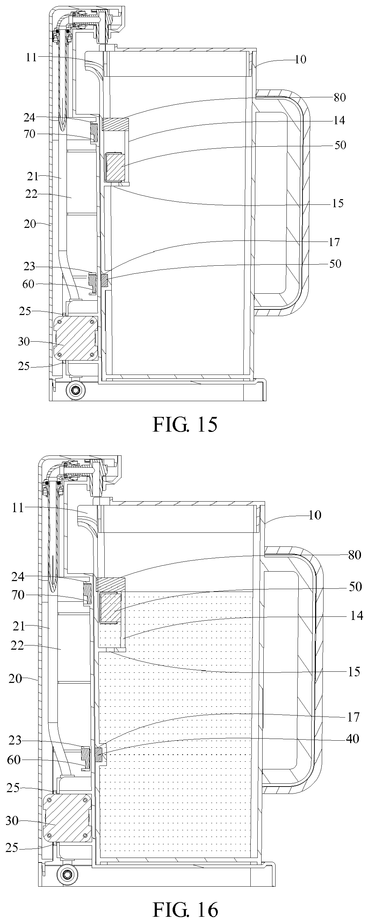

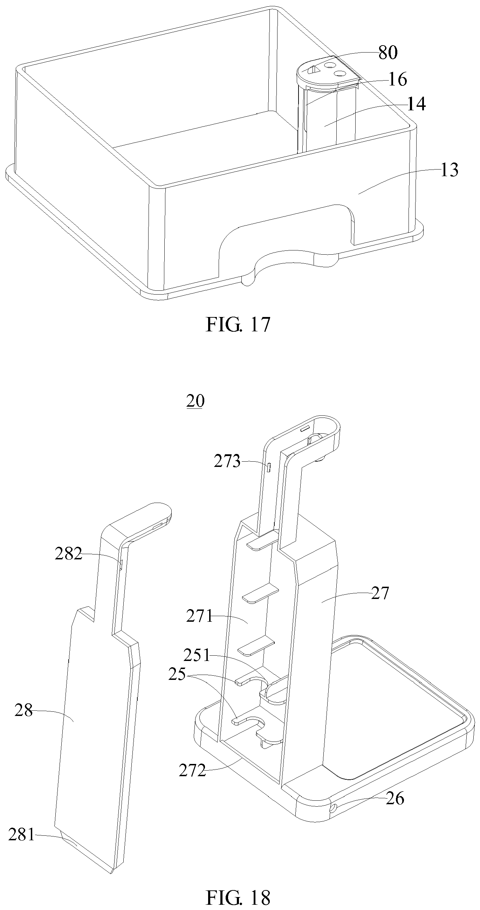

In one embodiment, referring to Fig.1, 2, 9, 10 and 15-18, the water receiver further includes:
a third induction device, mounted on the base and configured to sense the first induction device;
a fourth induction device, mounted on the base and configured to sense the second induction device; and
the controller, electrically connected to the electromagnetic valve, one of the first induction device and the third induction device, as well as one of the second induction device and the fourth induction device, the controller controls the electromagnetic valve to switch on when the controller receives a signal that one of the first induction device and the third induction device which is electrically connected to the controller senses the other, and controls the electromagnetic valve to switch off when the controller fails to receive the signal that one of the first induction device and the third induction device which is electrically connected to the controller senses the other; or, the controller controls the electromagnetic valve to switch off when the controller receives the signal that one of the first induction device and the third induction device which is electrically connected to the controller senses the other, and receives the a signal that one of the second induction device and the fourth induction device which is electrically connected to the controller senses the other.

In order to control the electromagnetic valve 30 to switch on or switch off more intelligently, the water receiver 100 is further defined with a first induction device 40, a second induction device 50, a third induction device 60 and a fourth induction device 70. The first induction device 40 is mounted on the water storage cup 10, the second induction device 50 is mounted in the water storage cup 10 and movable along the up and down direction under the action of the water in the water storage cup 10. The third induction device 60 and the fourth induction device 70 are both mounted on the base 20, the third induction device 60 is disposed corresponding to the first induction device 40, and the fourth induction device 70 is disposed corresponding to the second induction device 50.

The controller is electrically connected to one of the first induction device 40 and the second induction device 50, as well as one of the third induction device 60 and the fourth induction device 70, respectively. The controller controls the electromagnetic valve 30 to switch on or switch off according to whether one of the first induction device 40 and the second induction device 50 which is electrically connected to the controller senses the other, and one of the third induction device 60 and the fourth induction device 70 which is electrically connected to the controller senses the other.

When no water is in the water storage cup 10 or the water level in the water storage cup 10 is relatively low, and the water storage cup 10 is displaced on the base 20 or adjacent to the base 20, the first induction device 40 on the water storage cup 10 is aligned with the third induction device 60 on the base 20, the second induction device 50 in the water storage cup 10, unaffected by water, is misaligned with the fourth induction device 70 on the base 20. in this case, one of the first induction device 40 and the third induction device 60 which is electrically connected to the controller senses the other, while one of the second induction device 50 and the fourth induction device 70 which is electrically connected to the controller fails to sense the other, the controller triggers the control circuit of the electromagnetic valve 30 to switch the electromagnetic valve 30 on, so as to allow the purified water prepared by the water purifier 200 of the water purifying apparatus 300 to flow into the water storage cup 10.

When the water level of the purified water in the water storage cup 10 gradually rises, the second induction device 50 moves upward under the action of the purified water in the water storage cup 10. When the fourth induction device 70 is aligned with the second induction device 50, one of the fourth induction device 70 and the second induction device 50 which is electrically connected to the controller senses the other, which means that enough purified water is injected in the water storage cup 10, in this case, the controller triggers the control circuit of the electromagnetic valve 30 to switch the electromagnetic valve 30 off, so as to avoid excessive purified water injecting into the water storage cup 10 causing water overflow from the water storage cup 10.

When the water storage cup 10 is away from the base 20, the third induction device 60 on the base 20 and the first induction device 40 are separated from each other, one of the third induction device 60 and the first induction device 40 which is electrically connected to the controller fails to sense the other, in this case, the controller triggers the control circuit of the electromagnetic valve 30 to switch the electromagnetic valve 30 off.

In accordance with the present disclosure, a water flow path 21 is defined on the base 20 of the water receiver 100, an electromagnetic valve 30 is connected to the water flow path 21, in order to control the water flow path to switch on or switch off; the water storage cup 10 is provided with the first induction device 40 and the second induction device 50, the second induction device 50 is movable along the up and down direction under the action of the water in the water storage cup 10, the base 20 is provided with the third induction device 60 and the fourth induction device 70; the controller is electrically connected to the electromagnetic valve 30, one of the first induction device 40 and the third induction device 60, as well as one of the second induction device 50 and the fourth induction device 70; the controller controls the electromagnetic valve 30 to switch on or switch off according to whether one of the first induction device 40 and the third induction device 60 which is electrically connected to the controller senses the other, and one of the second induction device 50 and the fourth induction device 70 which is electrically connected to the controller senses the other, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

It should be noted that, the first induction device 40 and the third induction device 60 are used in pairs, the second induction device 50 and the fourth induction device 70 are used in pairs. Generally, there are many types of induction devices used in pairs, for example, the first induction device 40 and the third induction device 60 as well as the second induction device 50 and the fourth induction device 70 are all magnetic control devices. The first induction device 40 and the second induction device 50 are both magnetic float balls with magnetic attraction, the third induction device 60 and the fourth induction device 70 are both magnetic switches electrically connected to the controller. Specifically, the first induction device 40 and the third induction device 60 are both fixedly mounted. That is to say, one magnetic float ball is fixedly mounted on the water storage cup 10, one magnetic switch is fixedly mounted on the base 20, as long as the two are aligned with each other, the magnetic switch is switched on under the attraction of the magnetic float ball. when the controller receives the signal that the magnetic switch is switched of, the controller controls the electromagnetic valve 30 to switch on. The second induction device 50 is movable, the fourth induction device 70 is fixedly disposed, that is to say, the other magnetic float ball is movably mounted inside the water storage cup 10, and the other magnetic switch is fixedly mounted on the base 20. Only when the magnetic float ball is lifted under the action of the water in the water storage cup 10, it is aligned with the magnetic switch on the base 20. And when the magnetic float ball moves upward with the water in the water storage cup 10 to be aligned with the magnetron switch, the water storage cup 10 is filled with enough water. The controller receives the signal that the magnetic switch senses the magnetic float ball mounted in the water storage cup 10, the controller controls the electromagnetic valve 30 to switch off. When the water storage cup 10 and the base 20 are separated from each other, the magnetic switch fixedly mounted on the base 20 is switched off for being away from the magnetic float ball fixedly mounted on the water storage cup 10, in this case, the controller triggers the control circuit of the electromagnetic valve 30 to switch the electromagnetic valve 30 off.

For another example, the third induction device 60 and the fourth induction device 70 are both capacitance inductors electrically connected to the controller. The capacitance inductor is equivalent to an electrode, therefore, a capacitor is formed between the capacitance inductor and the ground, and the charging and discharging time of the capacitor formed between the capacitance inductor and the ground is fixed. The metal ball is capacitive. As the water level in the water storage cup 10 rises, the metal ball moves upward under the action of the water in the water storage cup 10. When the metal ball is aligned with the capacitance inductor, a capacitor is formed between the capacitance inductor and the metal ball, which is equivalent to connecting a capacitor in series between the capacitance inductor and the ground, so that the charging and discharging time of the capacitance inductor is extended on the original basis. Therefore, the water level in the water storage cup 10 may be determined by sensing the charging and discharging time of the capacitance inductor.

For easy description, in the following, that the fourth induction device 70 is electrically connected to the controller is taken as an example for specific description. Considering that the second induction device 50 is movably mounted in the water storage cup 10, if the moving path thereof is not limited, it may happen that when the fourth induction device 70 and the second induction device 50 are in the same horizontal position, the fourth induction device 70 fails to sense the second induction device 50. In view of this, the water storage cup 10 is defined with a guiding structure therein. The second induction device 50 is movably connected to the guiding, and moves along the guiding structure under the action of water in water storage cup 10, which ensures that when the fourth induction device 70 is in the same horizontal position with the second induction device 50, the fourth induction device 70 senses the second induction device 50, thereby improving the sensing accuracy of the fourth induction device 70, so as to avoid that the fourth induction device 70 fails to sense the second induction device 50 in time causing water overflow from the water storage cup 10.

To facilitate the fixed mounting of the first induction device 40, the outer wall of the water storage cup 10 is partially recessed to form a receiving dent 17. The first induction device 40 is fixedly mounted in the receiving dent 17. The first induction device 40 may be fixedly mounted in the receiving dent 17 by plugging, embedding, bonding, and other mounting methods, which are not to be detailed herein, which facilitates mounting the first induction device 40 in the water storage cup 10, and prevents the first induction device 40 from being affected by the purified water in the water storage cup 10.

It should be noted that, when the third induction device 60, the fourth induction device 70 and the electromagnetic valve 30 are mounted outside the base 20, they are easily affected by external factors such as water and dust. In view of this, in one embodiment of the present disclosure, the base 20 is hollow and forms a mounting cavity 22, the third induction device 60, the fourth induction device 70 and the electromagnetic valve 30 are all mounted in the mounting cavity 22, which effectively protects the third induction device 60, the fourth induction device 70 and the electromagnetic valve 30 against external factors such as water and dust.

It should be noted that, there are many ways for the third induction device 60 and the fourth induction device 70 to be fixedly mounted in the mounting cavity 22. The third induction device 60 and the fourth induction device 70 may be fixedly mounted in the mounting cavity 22 by screw connection, rivet riveting, buckle connection, or other connection manners. Considering the mounting and dismounting of the third induction device 60 and the fourth induction device 70, in one embodiment of the present disclosure, the third induction device 60 and the fourth induction device 70 are both fixedly mounted in the mounting cavity 22 by plugging. Specifically, a first convex rib 23 and a second convex rib 24 both having ring like shapes are protruded on the wall of the mounting cavity adjacent to the water storage cup. The first convex rib 23 and the second convex rib 24 may respectively be a complete circular ring, or a circular ring with a notch, as long as the first convex rib 23 cooperates with the wall of the mounting cavity 22 to form a first mounting groove, and the second convex rib 24 cooperates with the wall of the mounting cavity 22 to form a second mounting groove. The third induction device 60 is plugged into the first mounting groove, and the fourth induction device 70 is plugged into the second mounting groove, which saves the arrangement of additional fixtures, and facilitates the mounting and dismounting of the third induction device 60 and the fourth induction device 70.

It should be noted that, the third induction device 60, the fourth induction device 70 and the electromagnetic valve 30 are mounted in the mounting cavity 22 of the base 20 after the base 20 is formed. In view of this, in one embodiment of the present disclosure, the base 20 is divided into a first housing 27 and a second housing 28. The surface of the first housing 27 facing the second housing 28 defines a dent 271, a stop plate 272 is defined at one side of the dent 271, a latch block 273 is defined at the opposite side of the dent 271. One end of the second housing 28 defines a plugging plate 281, the opposite end of the second housing 28 defines a latch hole 282. The plugging plate 281 plugs into the dent 271 and abuts against the stop plate 272, the latch hole 282 latches with the latch block 273, allowing the second housing 28 to cover the dent 271 of the first housing 27 to form the mounting cavity 22 together with the first housing 27, which facilitates mounting the second induction device 50 and the electromagnetic valve 30 in the mounting cavity 22 of the base 20.

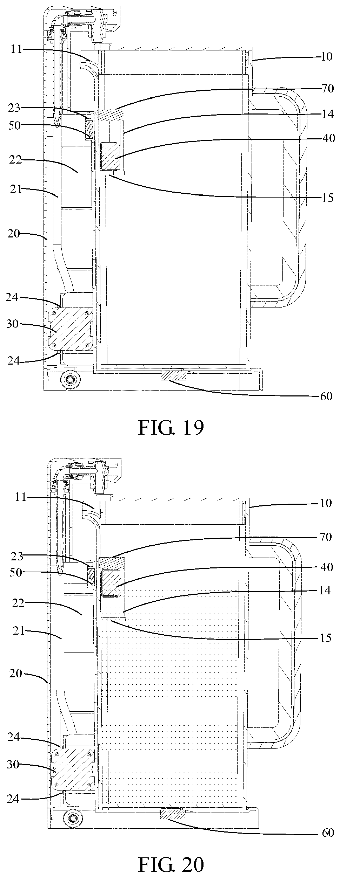

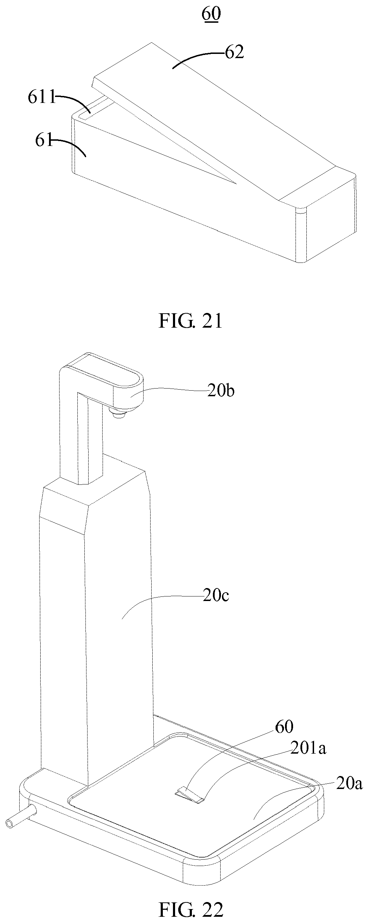

In the embodiments that the water receiver includes the first induction device and the second induction device without any other induction devices, referring to Fig.1, 2, 5, 8, 9, 14 and 19-22, the water receiver further includes an induction switch. When the induction switch is in contact with the water storage cup, the induction switch is switched on; when the induction switch is away from the water storage cup, the induction switch is switched off. The induction switch is electrically connected to the controller.

the controller controls the electromagnetic valve to switch on when the controller receives a signal that the induction switch is switched on; the controller controls the electromagnetic valve to switch off when the controller receives a signal that the induction switch is switched off; or the controller controls the electromagnetic valve to switch off when the controller receives the signal that the induction switch is switched on and receives the signal that one of the first induction device and the second induction device which is electrically connected to the controller senses the other.

In order to control the electromagnetic valve 30 to switch on or switch off more intelligently, the water receiver 100 is further defined with a first induction device 40, a second induction device 50 and an induction switch 60. The first induction device 40 is movably mounted in the water storage cup 10 and movable along the up and down direction under the action of water in the water storage cup 10, the second induction device 50 and the induction switch 60 are both mounted on the base 20. The controller is also electrically connected to one of the first induction device 40 and the second induction device 50, as well as the induction switch 60. The controller controls the electromagnetic valve 30 to switch on or switch off according to whether one of the first induction device 40 and the second induction device 50 which is electrically connected to the controller senses the other, and whether the induction switch 60 senses the water storage cup 10.

When no water is in the water storage cup 10 or the water level in the water storage cup 10 is relatively low, and the water storage cup 10 is disposed on the base 20 or adjacent to the base 20, the induction switch 60 on the base 20 is in contact with the water storage cup 10 and is switched on; the first induction device 40 is misaligned with the second induction device 50 on the base 20 for not being affected by the water in the water storage cup 10. In this case, the controller receives the signal that the induction switch 60 is switched on, and triggers the control circuit of the electromagnetic valve 30 to switch the electromagnetic valve 30 on, so as to allow the purified water prepared by the water purifier 200 of the water purifying apparatus 300 to flow into the water storage cup 10.As the water level in water storage cup 10 gradually rises, the first induction device 40 moves upward under the action of the water in the water storage cup 10. When the first induction device 40 is aligned with the second induction device 50, one of the first induction device 40 and the second induction device 50 which is electrically connected to the controller senses the other. When the controller receives the signal that one of the first induction device 40 and the second induction device 50 senses the other, the controller triggers the control circuit of the electromagnetic valve 30 to switch the electromagnetic valve 30 off, so as to avoid excessive purified water injecting into the water storage cup 10 causing water overflow from the water storage cup 10.When the water storage cup 10 is away from the base 20, the induction switch 60 on the base 20 is switched off for being away from the water storage cup 10, in this case, the controller triggers the control circuit of the electromagnetic valve 30 to switch the electromagnetic valve 30 off.

In accordance with the present disclosure, a water flow path 21 is defined on the base 20 of the water receiver 100, an electromagnetic valve 30 is connected to the water flow path 21, in order to control the water flow path to switch on or switch off; a first induction device 40 is provided in the water storage cup 10, and the first induction device 40 is movable along the up and down direction under the action of the water in the water storage cup 10, the base 20 is provided with the induction switch 60 and the second induction device 50, the controller of the water receiver 100 is electrically connected to the electromagnetic valve 30, the induction switch 60 as well as one of the first induction device 40 and the second induction device 50, the controller controls the electromagnetic valve 30 to switch on or switch off according to whether the induction switch 60 senses the water storage cup 10 and whether one of the first induction device 40 and the second induction device 50 which is electrically connected to the controller senses the other, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

It should be noted that, the induction switch 60 may abut against the side wall of the water storage cup 10, or abut against the bottom of the water storage cup 10. Positions where the induction switch 60 abuts against the water storage cup 10 are not limited herein. Preferably, the induction switch 60 abuts against the bottom of the water storage cup 10.Specifically, the base 20 has an I-shape, including a first portion 21a, a second portion 20b disposed upon the first portion 20a, and a third portion 20c connecting the first portion 20a and the second portion 20b. The outlet of the water flow path 21 is defined on the second portion 20b. The induction switch 60 is disposed on the outer surface of the first portion 20a facing the second portion 20b. When the water storage cup 10 is disposed on the base 20, the bottom of the water storage cup 10 contacts with the induction switch 60, and the water intake 11 is aligned with the outlet of the water flow path 21, which ensures that the water storage cup 10 triggers the induction switch 60, and facilitates the base 20 injecting water into the water storage cup 10.

It should be noted that, there are various types of the induction switch 60. The induction switch 60 includes an induction body 61 and an induction shrapnel 62. The induction body 61 is defined with an induction contactor 611. One end of the induction shrapnel 62 is fixedly connected to the induction body 61, the other end of the induction shrapnel 62 is spaced apart from the induction body 61. The induction switch 60 is switched on when the induction shrapnel 62 is in contact with the induction contactor 611 for being affected by external force, and the induction switch 60 is switched off when the induction shrapnel 62 recovers elastic deformation and is apart from the induction contactor 611 for being unaffected by external force.

To facilitate the mounting of the induction switch 60, the surface of the first portion 20a facing the second portion 20b is provided with a receiving dent 201a. The induction body 61 of the induction switch 60 is fixedly mounted in the receiving dent 201a, the free end of the induction shrapnel 62 protrudes from the receiving dent 201a, which facilitates the fixed mounting of the induction switch 60, and facilitates the induction switch 60 contacting with the water storage cup 10.

It is obvious that the induction switch 60 is some other spring switch. For example, the spring switch includes two connectors and a spring. The two connectors are spaced apart by the spring. When one connector moves toward the other connector under the action of external force, the spring switch is on; when the two connectors are spaced apart for withdrawing the external force, the spring switch is off.

It is obvious that the induction switch 60 may be other types of switches, which are not to be detailed herein.

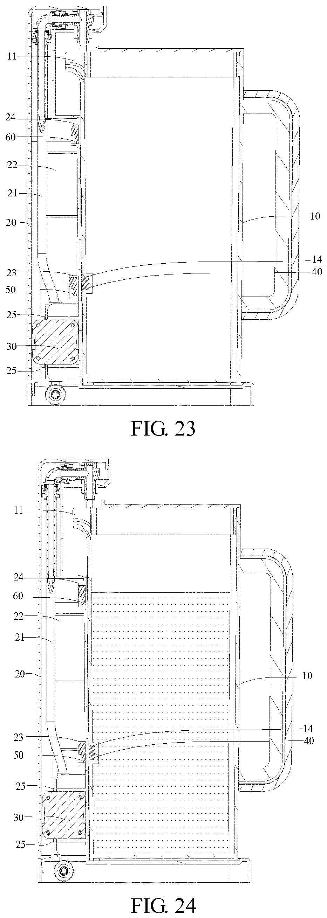

In the embodiments that the water receiver includes the first induction device and the second induction device without any other induction devices, referring to Fig.1, 2, 5, 9, 10, 18, 23 and 24, the water receiver further includes a capacitance induction device. The capacitance induction device is mounted on the water storage cup or on the base, and electrically connected to the controller. the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

In order to control the electromagnetic valve 30 to switch on or switch off more intelligently, the water receiver 100 is further defined with a first induction device 40, a second induction device 50 and a capacitance induction device 60. The first induction device 40 is mounted on the water storage cup 10, the second induction device 50 is mounted on the base 20,one of the first induction device 40 and the second induction device 50 is electrically connected to the controller. When the first induction device 40 is aligned with the second induction device 50, one of the first induction device 40 and the second induction device 50 which is electrically connected to the controller senses the other. The capacitance induction device 60 is mounted on the base 20 or on the water storage cup 10. The capacitance induction device 60 is equivalent to an electrode, a capacitor is formed between the capacitance induction device 60 and the ground, and the charging and discharging time of the capacitor formed between the capacitance induction device 60 and the ground is fixed. The water in the water storage cup 10 is capacitive, when the water in the water storage cup 10 is adjacent to the capacitance induction device 60, a capacitor is formed between the capacitance induction device 60 and the water in the water storage cup 10, which is equivalent to connecting a capacitor in series between the capacitance induction device 60 and the ground, so that the charging and discharging time of the capacitive induction device 60 is extended on the original basis. Therefore, the water level in the water storage cup 10 may be determined by sensing the charging and discharging time of the capacitance induction device 60.

When no water is in the water storage cup 10 or the water level is lower than the position of the capacitance induction device 60, the induction switch 40 is aligned with the second induction switch 50. One of the induction switch 40 and the second induction switch 50 which is electrically connected to the controller senses the other, the capacitance induction device 60 fails to sense the water in the water storage cup 10. in this case, the controller receives the signal that one of the induction switch 40 and the second induction switch 50 which is electrically connected to the controller senses the other, the controller triggers the control circuit of the electromagnetic valve 30 to switch the electromagnetic valve 30 on, so as to allow the purified water prepared by the water purifier 200 of the water purifying apparatus 300 to flow into the water storage cup 10.

After a certain amount of water is injected into the water storage cup 10, the water level in the water storage cup 10 rises. When the water level in the water storage cup 10 rises adjacent to the capacitance induction device 60, a capacitor is formed between the capacitance induction device 60and the water in the water storage cup 10, which extends the charging and discharging time of the capacitance induction device 60.When the controller receives the signal that the charging and discharging time of the capacitance induction device 60 extends, namely the capacitance induction device 60 senses the water, the controller triggers the control circuit of the electromagnetic valve 30 to switch the electromagnetic valve 30 off.

When the water storage cup 10 is away from the base 20, namely the water storage cup 10 is away from the induction switch, the first induction device 40 is some distance from the second induction device 50, in this case, the controller fails to receive the signal that one of the first induction device 40 and the second induction device 50 which is electrically connected with the controller senses the other, the controller triggers the control circuit of the electromagnetic valve 30 to switch the electromagnetic valve 30 off.

In accordance with the present disclosure, a water flow path 21 is defined on the base 20 of the water receiver 100, an electromagnetic valve 30 is connected to the water flow path 21, in order to control the water flow path to switch on or switch off. It's to determine whether the water storage cup 10 of the water receiver 100 is in need of receiving water by disposing the first induction device 40 on the base 20 and the second induction device 50 on the water storage cup 10, and to determine whether the water storage cup 10 of the water receiver 100 is filled with water by disposing the capacitance induction device 60 on the base 20 or on the water storage cup 10, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

For another example, the first induction device 40 is an infrared emitting device, the second induction device 50 is an infrared receiving device. When the water storage cup 10 is disposed on the base 20, the infrared receiving device receives infrared rays emitted from the infrared emitting device. At the time, the controller triggers the control circuit of the electromagnetic valve 30 to switch the electromagnetic valve 30 on; when the water storage cup 10 is away from the base 20, the infrared receiving device fails to receive infrared rays emitted from the infrared emitting device. At the time, the controller triggers the control circuit of the electromagnetic valve 30 to switch the electromagnetic valve 30 off.

It is obvious that the first induction device 40 and the second induction device 50 may also be other induction devices, which are not to be detailed herein.

It should be noted that, the first induction device 40 may be mounted on the outer side of the water storage cup 10, or on the inner side of the water storage cup 10, which are not to be detailed herein. In one embodiment of the present disclosure, the outer surface of the water storage cup 10 is partially recessed to form a receiving dent 14, and the first induction device 40 is fixedly mounted in the receiving dent 14, which facilitates the fixed mounting of the first induction device 40, and prevents the first induction device 40 from being affected by the purified water in the water storage cup 10.

It should be noted that, when the second induction device 50, the capacitance induction device 60 and the electromagnetic valve 30 are mounted outside the base 20, they are easily affected by external factors such as water and dust. In view of this, in one embodiment of the present disclosure, the base 20 is hollow and forms a mounting cavity 22, the second induction device 50 and the electromagnetic valve 30 are all mounted in the mounting cavity 22, which effectively protects the second induction device 50, the capacitance induction device 60 and the electromagnetic valve 30 against external factors such as water and dust.

It should be noted that, there are many ways for the second induction device 50 and the capacitance induction device 60 to be fixedly mounted in the mounting cavity 22. The second induction device 50 may be fixedly mounted in the mounting cavity 22 by screw connection, rivet riveting, buckle connection, or other connection manners. Considering the mounting and dismounting of the second induction device 50 and the capacitance induction device 60, in one embodiment of the present disclosure, the second induction device 50 is fixedly mounted in the mounting cavity 22 by plugging. Specifically, a first convex rib 23 having a ring like shape is protruded on the wall of the mounting cavity 22 adjacent to the water storage cup 10. The first convex rib 23 may be a complete circular ring, or a circular ring with a notch, as long as the first convex rib 23 cooperates with the wall of the mounting cavity 22 to form a first mounting groove. The second induction device 50 is plugged in the first mounting groove, which saves the arrangement of additional fixtures, and facilitates the mounting and dismounting of the second induction device 50.

The capacitance induction device 60 is fixedly mounted in the mounting cavity 22 by plugging. Specifically, a second convex rib 24 having a ring like shape is protruded on the wall of the mounting cavity 22 adjacent to the water storage cup 10. The second convex rib 24 may be a complete circular ring, or a circular ring with a notch, as long as the first convex rib 23 cooperates with the wall of the mounting cavity 22 to form a second mounting groove. The capacitance induction device 60 is plugged in the second mounting groove, which saves the arrangement of additional fixtures, and facilitates the mounting and dismounting of the second induction device 50.

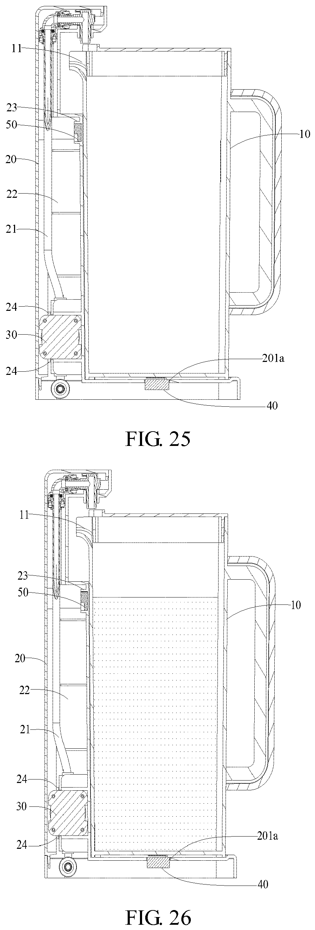

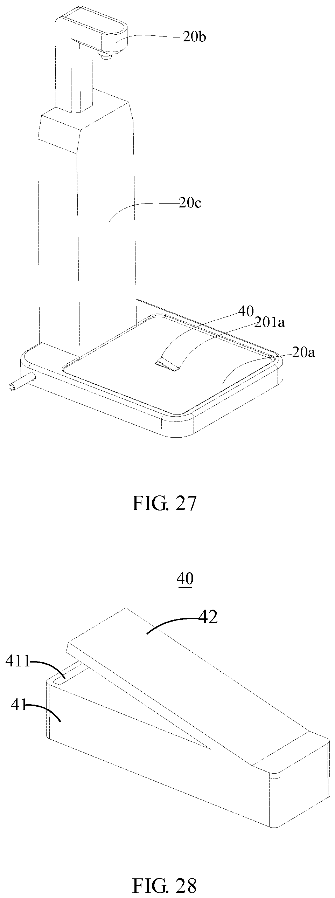

The present disclosure provides a water receiver, referring to Fig.1, 2, 5, 8, 9 and 25-28, which is applied to a water purifying apparatus. The water receiver is communicated with the waterway of the water purifier of the water purifying apparatus, and configured to store purified water prepared by the water purifier of the water purifying apparatus. The water purifier includes:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
an induction switch, mounted on the base, the induction switch is switched on when the induction switch is in contact with the water storage cup, and is switched off when the induction switch is away from the water storage cup;
a capacitance induction device, mounted on the water storage cup or on the base; and
the controller, electrically connected to the electromagnetic valve, the induction switch, and the capacitance induction device; the controller controls the electromagnetic valve to switch on when the controller receives a signal that the induction switch is switched on; the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

In order to control the electromagnetic valve 30 to switch on or switch off more intelligently, the water receiver 100 is further defined with an induction switch 40 and a capacitance induction device 50 electrically connected to the controller. The induction switch 40 is mounted on the base 20. The induction switch 40 is switched on when the induction switch 40 is in contact with the water storage cup 10, and is switched off when the induction switch 40 is away from the water storage cup 10. The capacitance induction device 50 may be mounted on the base 20 or on the water storage cup 10, which are to be detailed herein. The capacitance induction device 50 is equivalent to an electrode, a capacitor is formed between the capacitance induction device 50 and the ground, and the charging and discharging time of the capacitor formed between the capacitance induction device 50 and the ground is fixed. The water in the water storage cup 10 is capacitive, when the water in the water storage cup 10 is adjacent to the capacitance induction device 50, a capacitor is formed between the capacitance induction device 50 and the water in the water storage cup 10, which is equivalent to connecting a capacitor in series between the capacitance induction device 50 and the ground, so that the charging and discharging time of the capacitive induction device 50 is extended on the original basis. Therefore, the water level in the water storage cup 10 may be determined by sensing the charging and discharging time of the capacitance induction device 50.

When no water is in the water storage cup 10 or the water level is lower than the position of the capacitance induction device 50, the capacitance induction device 50 fails to sense the water in the water storage cup 10. The induction switch 40 is switched on when the induction switch 40 contacting with the water storage cup 10. When the controller receives the signal that the induction switch 40 is switched on, the controller triggers the control circuit of the electromagnetic valve 30 to switch the electromagnetic valve 30 on, so as to allow the purified water prepared by the water purifier 200 of the water purifying apparatus 300 to flow into the water storage cup 10.

After a certain amount of water is injected into the water storage cup 10, the water level in the water storage cup 10 rises. When the water level in the water storage cup 10 rises adjacent to the capacitance induction device 50, a capacitor is formed between the capacitance induction device 50 and the water in the water storage cup 10, which extends the charging and discharging time of the capacitance induction device 50. When the controller receives the signal that the charging and discharging time of the capacitance induction device 50 extends, namely the capacitance induction device 50 senses the water, the controller triggers the control circuit of the electromagnetic valve 30 to switch the electromagnetic valve 30 off.

When the water storage cup 10 is away from the base 20, namely the water storage cup 10 and the induction switch 40 are separated from each other, the induction switch 40 is switched off. When the controller receives a signal that the induction switch 40 is switched off, the controller triggers the control circuit of the electromagnetic valve 30 to switch the electromagnetic valve 30 off.

In accordance with the present disclosure, a water flow path 21 is defined on the base 20 of the water receiver 100, an electromagnetic valve 30 is connected to the water flow path 21, in order to control the water flow path to switch on or switch off. It is to determine whether the water storage cup 10 of the water receiver 100 is in need of receiving water by disposing the induction switch 40 on the base 20, and to determine whether the water storage cup 10 of the water receiver 100 is filled with water by disposing the capacitance induction device 50 on the base 20 or on the water storage cup 10, which facilitates controlling when to start water injection and when to stop water injection into the water storage cup 10, and ensures that after the water storage cup 10 is disposed on the base 20, the water storage cup 10 is always filled with water, improving users' experience. In addition, the water receiver 100 and the water purifier 200 of the water purifying apparatus 300 are arranged separately, which is conducive to reducing the volume of the water purifying apparatus 300, thereby facilitating the installation of the water purifying apparatus 300. And the water storage cup 10 of the water receiver 100 and the base 20 are arranged separately, also convenient for the cleaning of the water storage cup 10 which is used to storage water.

It should be noted that, the induction switch 40 may abut against the side wall of the water storage cup 10, or abut against the bottom of the water storage cup 10, or abut against both the side wall and the bottom of the water storage cup 10. Positions where the induction switch 40 abuts against the water storage cup 10 are not limited herein.

Preferably, the induction switch 40 abuts against the bottom of the water storage cup 10. To facilitate the induction switch 40 abutting against the bottom of the water storage cup 10, the base 20 has an I-shape, including a first portion 21a, a second portion 20b disposed upon the first portion 20a, and a third portion 20c connecting the first portion 20a and the second portion 20b. The outlet of the water flow path 21 is defined on the second portion, the induction switch 40 is defined on the outer surface of the first portion 20a facing the second portion 20b. When the water storage cup 10 is disposed on the base 20, the bottom of the water storage cup 10 is in contact with the induction switch 40, and the water intake 11 is aligned with the outlet of the water flow path 21, which ensures that the water storage cup 10 triggers the induction switch 40, and facilitates the base 20 injecting water into the water storage cup 10.

It should be noted that, there are various kinds of the structure of the induction switch 40. The induction switch 40 includes a induction body 41 and a induction shrapnel 42. The induction body 41 is defined with an induction 411, one end of the induction shrapnel 42 is fixedly connected to the induction body 41, the other end of the induction shrapnel 42 is spaced apart from the induction contactor 411. The induction switch 40 is switched on when the induction shrapnel 42 is in contact with the induction contactor 411, and is switched off when the induction shrapnel 42 is away from the induction contactor 411.

For another example, the induction switch 40 includes a first induction chip, a second induction chip and a spring connecting the first induction chip the second induction chip. The first induction chip moves toward the second induction chip affected by external force, when the first induction chip is in contact with the second induction chip, the induction switch 40 is switched on; the first induction chip moves away from the second induction chip when unaffected by external force, the induction switch 40 is switched off.

It is obvious that the induction switch 40 may be other types of switches, which are not to be detailed herein.

Considering the mounting of the induction switch 40, the surface of the first portion 20a facing the second portion 20b is provided with a receiving dent 201a. The induction body 41 is fixedly mounted in the receiving dent 201a, the free end of the induction shrapnel 42 protrudes from the receiving dent 201a, which facilitates the fixed mounting of the induction switch 40.

It should be noted that, when the capacitance induction device 50 and the electromagnetic valve 30 are mounted outside the base 20, they are easily affected by external factors such as water and dust. In view of this, in one embodiment of the present disclosure, the base 20 is hollow and forms a mounting cavity 22, the capacitance induction device 50 and the electromagnetic valve 30 are both mounted in the mounting cavity 22, which effectively protects the capacitance induction device 50 and the electromagnetic valve 30 against external factors such as water and dust.

It should be noted that, there are many ways for the capacitance induction device 50 to be fixedly mounted in the mounting cavity 22. For example, the capacitance induction device 50 may be fixedly mounted in the mounting cavity 22 by screw connection, rivet riveting, buckle connection, or other connection manners. Considering the mounting and dismounting of the second induction device and the capacitance induction device 50, in one embodiment of the present disclosure, the capacitance induction device 50 is fixedly mounted in the mounting cavity 22 by plugging. Specifically, a convex rib 23 having a ring like shape is protruded on the wall of the mounting cavity 22 adjacent to the water storage cup 10. The convex rib 23 may be a complete circular ring, or a circular ring with a notch, as long as the convex rib 23 cooperates with the wall of the mounting cavity 22 to form a mounting groove. The capacitance induction device 50 is plugged in the mounting groove, which saves the arrangement of additional fixtures, and facilitates the mounting and dismounting of the capacitance induction device 50.

The present disclosure also provides a water purifying apparatus 300, the water purifying apparatus 300 includes a water purifier 200 configured for preparing purified water and a water receiver 100 connected to the waterway of the water purifier 200, the specific structure of the water receiver 100 referring to the above embodiments. The water purifying apparatus 300 adopts all the technical solutions of the above embodiments, therefore, at least, the water purifying apparatus obtains all the effects brought by the technical solutions of the above embodiments, which are to be detailed herein.

The foregoing description merely portrays some illustrative embodiments in accordance with the disclosure and therefore is not intended to limit the patentable scope of the disclosure. Any equivalent structure or flow transformations that are made taking advantage of the specification and accompanying drawings of the disclosure and any direct or indirect applications thereof in other related technical fields shall all fall in the scope of protection of the disclosure.

## Claims

1. A water receiver, which is applied to a water purifying apparatus, **characterized in that**, the water receiver comprises:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
a first induction device and a second induction device, one of the first induction device and the second induction device being mounted in the water storage cup and moving up and down under the action of water in the water storage cup, and the other being mounted on the base; and
a controller, electrically connected to the electromagnetic valve and one of the first induction device and the second induction device respectively, the controller controls the electromagnetic valve to switch on when the controller receives a signal that one of the first induction device and the second induction device which is electrically connected to the controller senses the other, and controls the electromagnetic valve to switch off when the controller fails to receive the signal that one of the first induction device and the second induction device which is electrically connected to the controller senses the other;
or, the water receiver further comprises:
a third induction device, mounted on the base and configured to sense the first induction device;
a fourth induction device, mounted on the base and configured to sense the second induction device; and
the controller, electrically connected to the electromagnetic valve, one of the first induction device and the third induction device, and one of the second induction device and the fourth induction device, the controller controls the electromagnetic valve to switch on when the controller receives a signal that one of the first induction device and the third induction device which is electrically connected to the controller senses the other, and controls the electromagnetic valve to switch off when the controller fails to receive the signal that one of the first induction device and the third induction device which is electrically connected to the controller senses the other; or, the controller controls the electromagnetic valve to switch off when the controller receives the signal that one of the first induction device and the third induction device which is electrically connected to the controller senses the other, and receives the a signal that one of the second induction device and the fourth induction device which is electrically connected to the controller senses the other.

2. The water receiver of claim 1, wherein the first induction device is a magnetic float ball with magnetic attraction, the second induction device is a magnetic switch electrically connected to the controller; or
the first induction device is a metal ball, the second induction device is a capacitance inductor electrically connected to the controller.

3. The water receiver of claim 1, wherein the water storage cup is defined with a guiding structure therein which extends up and down;
one of the first induction device and the second induction device which is mounted in the water storage cup is movably connected to the guiding structure, and moves along the guiding structure under the action of the water in the water storage cup.

4. The water receiver of claim 3, wherein the water storage cup comprises a cup body having an open upper end and a cup lid covering the cup body;
the guiding structure is a movable passage disposed on the cup body and/or on the cup lid and extending up and down, the movable passage communicates with the water storage cup;
one of the first induction device and the second induction device which is mounted in the water storage cup is movably mounted in the movable passage.

5. The water receiver of claim 4, wherein side wall of the movable passage is defined with a water inlet which extends up and down and passes through the side wall of the movable passage.

6. The water receiver of claim 4, wherein one end of the movable passage is open;
the water receiver further comprises a covering plate, the covering plate is detachably connected to the open end of the movable passage.

7. The water receiver of claim 1, wherein the base is hollow and forms a mounting cavity;
one of the first induction device and the second induction device which is mounted on the base, and the electromagnetic valve are both fixed in the mounting cavity.

8. The water receiver of claim 7, wherein a convex rib having a ring like shape is protruded on the wall of the mounting cavity adjacent to the water storage cup, the convex rib cooperates with the wall of the mounting cavity to form a mounting groove;
one of the first induction device and the second induction device which is mounted on the base is plugged in the mounting groove.

9. The water receiver of claim 7, wherein the wall of the mounting cavity is defined with two limiting plates which are spaced apart with each other along a up and down direction, each of the two limiting plates defines an avoiding opening through the limiting plate;
the electromagnetic valve comprises a valve body and connectors respectively communicated with the valve body, the valve body is engaged between the two limiting plates, each connector extends from the avoiding opening of the limiting plate at the corresponding side of each connector.

10. The water receiver of claim 7, wherein the water receiver further comprises a water pipe, the water pipe is mounted in the mounting cavity to form the water flow path;
the base defines an avoiding hole through the base, the avoiding hole allows one end of the water pipe to extend from to communicate with the water purifier pipeline.

11. The water receiver of claim 7, wherein the base comprises a first housing and a second housing;
the surface of the first housing facing the second housing defines a dent, a stop plate is defined at one side of the dent, a latch block is defined at the opposite side of the dent;
one end of the second housing defines a plugging plate, the opposite end of the second housing defines a latch hole; the plugging plate plugs into the dent and abuts against the stop plate, the latch hole latches with the latch block, allowing the second housing to cover the dent of the first housing to form the mounting cavity together with the first housing.

12. The water receiver of claim 1, wherein the base comprises a first portion, a second portion disposed above the first portion, and a third portion connecting the first portion and the second portion, the outlet of the water flow path is defined on the second portion;
the water intake is disposed upon the water storage cup, and aligns with the outlet of the water flow path when the water storage cup is disposed on the first portion and abuts against the third portion.

13. The water receiver of claim 1, wherein the water receiver further comprises a fifth induction device, the fifth induction device is mounted on the base and upon the second induction device, the fifth induction device electrically connects to the controller; the controller controls the electromagnetic valve to switch off when the controller receives a signal that the fifth induction device senses the first induction device but fails to receive a signal that the second induction device senses the first induction device; or the controller controls the electromagnetic valve to switch off when the controller fails to receive the signal that the second induction device senses the first induction device and the signal that the fifth induction device senses the first induction device.

14. The water receiver of claim 1, wherein the water receiver further comprises an induction switch, the induction switch is switched on when the induction switch contacts with the water storage cup, and is switched off when the induction switch is away from the water storage cup, the switch is electrically connected to the controller;
the controller controls the electromagnetic valve to switch on when the controller receives a signal that the induction switch is switched on; the controller controls the electromagnetic valve to switch off when the controller receives a signal that the induction switch is switched off; or the controller controls the electromagnetic valve to switch off when the controller receives the signal that the induction switch is switched on and receives the signal that one of the first induction device and the second induction device which is electrically connected to the controller senses the other.

15. The water receiver of claim 1, wherein the water receiver further comprises a capacitance induction device, the capacitance induction device is mounted on the water storage cup or on the base, and is electrically connected to the controller; the controller controls the electromagnetic valve to switch off when the controller receives a signal that the induction switch is switched off; or, the controller controls the electromagnetic valve to switch off when the controller receives a signal that the induction switch is switched on and the capacitance induction device senses the water.

16. A water receiver, which is applied to a water purifying apparatus, **characterized in that**, the water receiver comprises:
a water storage cup, defined with a water intake;
a base, defined with a water flow path, the inlet of the water flow path is configured to communicate with a water purifier waterway of the water purifying apparatus, the outlet of the water flow path is configured to butt joint with the water intake of the water storage cup;
an electromagnetic valve, connected to the water flow path;
an induction switch, mounted on the base, the induction switch is switched on when the induction switch is in contact with the water storage cup, and is switched off when the induction switch is away from the water storage cup;
a capacitance induction device, mounted on the water storage cup or on the base; and
the controller, electrically connected to the electromagnetic valve, the induction switch, and the capacitance induction device; the controller controls the electromagnetic valve to switch on when the controller receives a signal that the induction switch is switched on; the controller controls the electromagnetic valve to switch off when the controller receives a signal that the induction switch is switched off; or, the controller controls the electromagnetic valve to switch off when the controller receives the signal that the induction switch is switched on and the capacitance induction device senses the water.

17. The water receiver of claim 16, wherein the base comprises a first portion, a second portion disposed above the first portion, and a third portion connecting the first portion and the second portion, the outlet of the water flow path is disposed on the second portion;
the induction switch is mounted on the surface of the first portion facing the second portion, the capacitance induction device is mounted on the third portion.

18. The water receiver of claim 17, wherein the induction switch comprises a induction body and an induction shrapnel;
the induction body is defined with an induction contactor;
one end of the induction shrapnel is fixedly connected to the induction body, the other end of the induction shrapnel is spaced apart from the induction contactor, the induction switch is switched on when the induction shrapnel is in contact with the induction contactor, and is switched off when the induction shrapnel is away from the induction contactor.

19. The water receiver of claim 18, wherein the surface of the first portion facing the second portion defines a receiving dent;
the induction body of the induction switch is fixedly mounted in the receiving dent, and the free end of the induction shrapnel protrudes from the receiving dent.

20. A water purifying apparatus, **characterized in that**, the water purifying apparatus comprises a water purifier which is configured to prepare purified water and a water receiver according to any one of claims 1-19, the water receiver communicates with a water purifier waterway.
